(19) Europäisches Patentamt
European Patent Office
Office européen des brevets

(11) EP 2 791 205 B1

(12) # EUROPÄISCHE PATENTSCHRIFT

(45) Veröffentlichungstag und Bekanntmachung des Hinweises auf die Patenterteilung:
**22.08.2018 Patentblatt 2018/34**

(21) Anmeldenummer: **12798740.2**

(22) Anmeldetag: **10.12.2012**

(51) Int Cl.:
***C08G 65/26*** *(2006.01)* ***C08G 64/34*** *(2006.01)*

(86) Internationale Anmeldenummer:
**PCT/EP2012/074985**

(87) Internationale Veröffentlichungsnummer:
**WO 2013/087582 (20.06.2013 Gazette 2013/25)**

(54) **VERFAHREN ZUR HERSTELLUNG VON POLYETHERESTERCARBONATPOLYOLEN**

METHOD FOR PRODUCING POLYETHERESTER CARBONATE POLYOLS

PROCÉDÉ DE PRÉPARATION DE POLYOLS DE CARBONATE DE POLYÉTHER ESTER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2011 EP 11194163**

(43) Veröffentlichungstag der Anmeldung:
**22.10.2014 Patentblatt 2014/43**

(73) Patentinhaber: **Covestro Deutschland AG**
**51373 Leverkusen (DE)**

(72) Erfinder:
- **GÜRTLER, Christoph**
  **50735 Köln (DE)**
- **MÜLLER, Thomas, Ernst**
  **52062 Aachen (DE)**
- **KERMAGORET, Anthony**
  **F-29350 Moelan sur mer (FR)**
- **DIENES, Yvonne**
  **30173 Hannover (DE)**
- **BARRUET, Julien**
  **94260 Fesnes (DE)**
- **WOLF, Aurel**
  **42489 Wülfrath (DE)**
- **GRASSER, Stefan**
  **51377 Leverkusen (DE)**

(74) Vertreter: **Levpat**
**c/o Covestro AG**
**Gebäude 4825**
**51365 Leverkusen (DE)**

(56) Entgegenhaltungen:
**EP-A1- 2 287 226** **WO-A1-2011/089120**
**US-B1- 6 713 599**

- **LIU Y. ET AL: "Synthesis, characterization and hydrolysis of an aliphatic polycarbonatet", POLYMER, Bd. 47, 2006, Seiten 8453-8461, XP002677228,**
- **DATABASE CAPLUS [Online] CHEMICAL ABSTRACTS SERVICE, COLUMBUS, OHIO, US; 15. November 2011 (2011-11-15), Dong Xu et al: "Study on synthesis of a novel polyetherester polyol", XP002677229, Database accession no. 156:58806**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 791 205 B1

## Beschreibung

Die vorliegende Erfindung betrifft ein Verfahren zur Herstellung von Polyetherestercarbonatpolyolen durch katalytische Anlagerung von Kohlendioxid, Alkylenoxiden und cyclischen Anhydriden an H-funktionelle Startersubstanzen in Gegenwart von Doppelmetallcyanid (DMC)-Katalysator.
Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al, Copolymerization of Carbon Dioxide and Alkylenoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkyaryl oder Aryl steht, der jeweils auch Heteroatome wie beispielsweise O, S, Si usw. enthalten kann, und wobei e und f für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, hier als unerwünschtes Nebenprodukt, entsteht das in Schema (I) gezeigte cyclische Carbonat (beispielsweise für R = $CH_3$ Propylencarbonat).

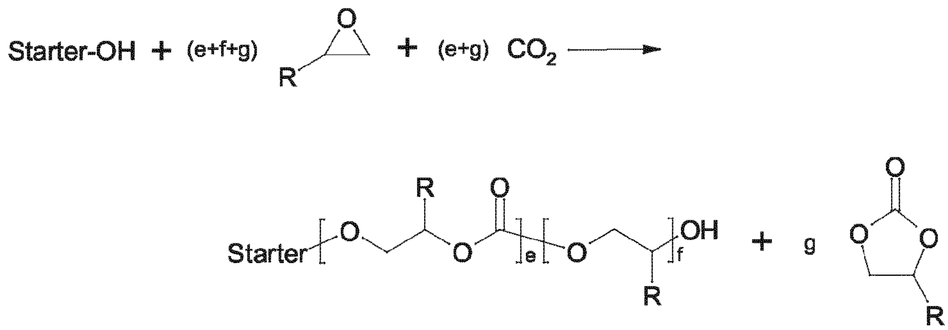

(I)

Als Aktivierung im Sinne dieser Erfindung wird ein Schritt bezeichnet, bei dem eine Teilmenge Alkylenoxidverbindung, gegebenenfalls in Gegenwart von $CO_2$ und/oder H-funktioneller Starterverbindung, zum DMC-Katalysator gegeben wird und dann die Zugabe der Alkylenoxidverbindung unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls $CO_2$ ein Druckabfall im Reaktor beobachtet wird. Gegebenenfalls kann die Zugabe der Teilmenge der Alkylenoxidverbindung in mehreren Einzelschritten erfolgen, wobei in der Regel jeweils das Auftreten der Wärmeentwicklung abgewartet wird. Der Verfahrensschritt der Aktivierung umfasst die Zeitspanne von Beginn der Zugabe der Teilmenge an Alkylenoxidverbindung, die Alkylenoxidverbindung in mehreren Einzelschritten umfasst der Verfahrensschritt der Aktivierung alle Zeitspannen, während der die Teilmengen der Alkylenoxidverbindung, gegebenenfalls in Gegenwart von $CO_2$, schrittweise zugegeben wurden bis zum Ende der Wärmeentwicklung nach der Zugabe der letzten Teilmenge der Alkylenoxidverbindung. Im Allgemeinen kann dem Aktivierungsschritt ein Schritt zum Trocknen des DMC-Katalysators und gegebenenfalls der H-funktionellen Starterverbindung bei erhöhter Temperatur und/oder reduziertem Druck, gegebenenfalls unter Durchleiten eines Inertgases durch die Reaktionsmischung, vorgelagert sein.

EP-A 2 287 226 offenbart die Copolymerisation von Propylenoxid, Maleinsäureanhydrid und Kohlendioxid in Gegenwart von Doppelmetallcyanid-Katalysatoren, wobei zur Polymerisation optional auch andere Monomere wie beispielsweise Anhydride zugesetzt werden können.

Liu Y. et al., "Synthesis, characterization and hydrolysis of an aliphatic polycarbonat", POLYMER, Bd. 47, 2006, Seiten 8453 - 8461 offenbart die Terpolymerisation von Propylenoxid, Kohlendioxid und Maleinsäureanhydrid an Polymer-geträgerten Bimetallischen Komplexen. H-funktionelle Starterverbindungen und DMC-Katalysatoren werden aber nicht eingesetzt.

Database Caplus (Online) Chemical Abstracts Service, Columbus, Ohio, US; 15. November 2011, Dong Xu et al., "Study on synthesis of a novel polyester polyol" offenbart die Herstellung von Hydroxyl-terminierten Polyetheresterpolyolen durch Copolymerisation von Propylenoxid, Maleinsäureanhydrid und Kohlendioxid in Gegenwart von Doppelmetallcyanid-Katalysatoren. Dong Xu et al. offenbaren aber nicht eine Aktivierung des DMC-Katalysators in Gegenwart eines cyclischen Anhydrids.

WO-A 2011/089120 offenbart die Copolymerisation von Propylenoxid und Kohlendioxid in Gegenwart von Doppelmetallcyanid-Katalysatoren, wobei der Doppelmetallcyanid-Katalysator in einem mehrstufigen Verfahren aktiviert

werden kann. Die Zugabe von Anhydriden in den Aktivierungsschritten ist aber nicht offenbart.

US 6 713 599 B1 offenbart die Copolymerisation von Propylenoxid und Kohlendioxid in Gegenwart von Doppelmetallcyanid-Katalysatoren.

EP-A 0 222 453 offenbart ein Verfahren zur Herstellung von Polycarbonaten aus Alkylenoxiden und Kohlendioxid unter Verwendung eines Katalysatorsystems aus DMC-Katalysator und einem Co-Katalysator wie Zinksulfat. Dabei wird die Polymerisation initiiert, indem einmalig ein Teil des Alkylenoxids mit dem Katalysatorsystem in Kontakt gebracht wird. Erst danach werden die Restmenge Alkylenoxid und das Kohlendioxid simultan zudosiert. Die bei EP-A 0 222 453 für den Aktivierungsschritt in den Beispielen 1 bis 7 angegebene Menge von 60 Gew.% Alkylenoxidverbindung relativ zur H-funktionellen Starterverbindung ist hoch und hat den Nachteil, dass dies für großtechnische Anwendungen aufgrund der hohen Exothermie der Homo-Polymerisation von Alkylenoxidverbindungen ein gewisses Sicherheitsrisiko darstellt. WO-A 2003/029325 offenbart ein Verfahren zur Herstellung von hochmolekularen aliphatischen Polyethercarbonatpolyolen (gewichtsmittleres Molekulargewicht größer als 30000 g/mol), bei dem ein Katalysator aus der Gruppe bestehend aus Zinkcarboxylat und Multimetallcyanidverbindung eingesetzt wird, der wasserfrei ist und der zunächst mit zumindest einer Teilmenge des Kohlendioxids in Kontakt gebracht wird, bevor man das Alkylenoxid zufügt. $CO_2$-Enddrücke von bis zu 150 bar stellen sehr hohe Anforderungen an den Reaktor sowie an die Sicherheit. Selbst durch den überaus hohen Druck von 150 bar wurden in das Polymer nur ca. 33 Gew.% $CO_2$ bis maximal 42 Gew.% $CO_2$ eingebaut. Die dargelegten Beispiele beschreiben die Verwendung eines Lösemittels (Toluol), das nach der Reaktion wieder thermisch abgetrennt werden muss, was zu erhöhtem Zeit- und Kostenaufwand führt. Des Weiteren weisen die Polymere mit einer Uneinheitlichkeit bzw. Polydispersität von 2,7 oder mehr eine sehr breite Molmassenverteilung auf.

Es war daher Aufgabe der vorliegenden Erfindung, ein Verfahren zur Herstellung von Polyetherestercarbonatpolyolen bereitzustellen, welches eine günstige Selektivität (d.h. niedriges Verhältnis von cyclischem Carbonat zu Polyetherestercarbonatpolyol) aufweist. In einer bevorzugten Ausführungsform der Erfindung soll gleichzeitig auch ein hoher Gehalt an ins Polymer eingebautem $CO_2$ bewirkt werden.

Überraschenderweise wurde nun gefunden, dass die erfindungsgemäße Aufgabe gelöst wird durch ein Verfahren zur Herstellung von Polyetherestercarbonatpolyolen durch katalytische Anlagerung von Kohlendioxid, Alkylenoxiden und cyclischen Anhydriden an eine oder mehrere H-funktionelle Startersubstanzen in Gegenwart von Doppelmetallcyanid (DMC)-Katalysator, wobei vorzugsweise in einem ersten Schritt der DMC-Katalysator und mindestens eine H-funktionelle Startersubstanz vorgelegt werden und in einem zweiten Schritt durch Zugabe von Alkylenoxid, $CO_2$ und ein Katalysator aus der Gruppe bestehend aus Zinkcarboxylat und Multimetallcyanidverbindung eingesetzt wird, der wasserfrei ist und der zunächst mit zumindest einer Teilmenge des Kohlendioxids in Kontakt gebracht wird, bevor man das Alkylenoxid zufügt. $CO_2$-Enddrücke von bis zu 150 bar stellen sehr hohe Anforderungen an den Reaktor sowie an die Sicherheit. Selbst durch den überaus hohen Druck von 150 bar wurden in das Polymer nur ca. 33 Gew.% $CO_2$ bis maximal 42 Gew.% $CO_2$ eingebaut. Die dargelegten Beispiele beschreiben die Verwendung eines Lösemittels (Toluol), das nach der Reaktion wieder thermisch abgetrennt werden muss, was zu erhöhtem Zeit- und Kostenaufwand führt. Des Weiteren weisen die Polymere mit einer Uneinheitlichkeit bzw. Polydispersität von 2,7 oder mehr eine sehr breite Molmassenverteilung auf.

Es war daher Aufgabe der vorliegenden Erfindung, ein Verfahren zur Herstellung von Polyetherestercarbonatpolyolen bereitzustellen, welches eine günstige Selektivität (d.h. niedriges Verhältnis von cyclischem Carbonat zu Polyetherestercarbonatpolyol) aufweist. In einer bevorzugten Ausführungsform der Erfindung soll gleichzeitig auch ein hoher Gehalt an ins Polymer eingebautem $CO_2$ bewirkt werden.

Überraschenderweise wurde nun gefunden, dass die erfindungsgemäße Aufgabe gelöst wird durch ein Verfahren zur Herstellung von Polyetherestercarbonatpolyolen durch katalytische Anlagerung von Kohlendioxid, Alkylenoxiden und cyclischen Anhydriden an eine oder mehrere H-funktionelle Startersubstanzen in Gegenwart von Doppelmetallcyanid (DMC)-Katalysator, wobei vorzugsweise in einem ersten Schritt der DMC-Katalysator und mindestens eine H-funktionelle Startersubstanz vorgelegt werden und in einem zweiten Schritt durch Zugabe von Alkylenoxid, $CO_2$ und gegebenenfalls cyclischem Anhydrid der DMC-Katalysator aktiviert wird, und in einem dritten Schritt [Polymerisationsstufe] die Monomeren Alkylenoxid, cyclisches Anhydrid und $CO_2$ zugegeben werden. Ein weiterer Gegenstand der Erfindung sind Polyetherestercarbonatpolyole erhältlich nach dem erfindungsgemäßen Verfahren.

Eine bevorzugte Ausführungsform des erfindungsgemäßen Verfahrens zur Herstellung von Polyetherestercarbonatpolyolen aus einer oder mehreren H-funktionellen Starterverbindungen, einem oder mehreren Alkylenoxiden, Kohlendioxid und einem oder mehreren cyclischen Anhydriden in Gegenwart eines DMC-Katalysators ist dadurch gekennzeichnet, dass

($\alpha$) die H-funktionelle Startersubstanz oder ein Gemisch aus mindestens zwei H-funktionellen Startersubstanzen vorgelegt und gegebenenfalls Wasser und/oder andere leicht flüchtige Verbindungen durch erhöhte Temperatur und/oder reduziertem Druck entfernt werden [erste Aktivierungsstufe], wobei der DMC-Katalysator der H-funktionellen Startersubstanz oder dem Gemisch von mindestens zwei H-funktionellen Startersubstanzen vor oder nach der 1. Aktivierungsstufe zugesetzt werden,

(β) eine Teilmenge (bezogen auf die Gesamtmenge der in den Schritten (β) und (γ) eingesetzten Menge an Alkylenoxiden) von einem oder mehreren Alkylenoxiden und gegebenenfalls eine Teilmenge (bezogen auf die Gesamtmenge der in den Schritten (β) und (γ) eingesetzten Menge an cyclischen Anhydriden) von einem oder mehreren cyclischen Anhydriden zu der aus Schritt (α) resultierenden Mischung zugesetzt wird [zweite Aktivierungsstufe], wobei diese Zugabe einer Teilmenge an Alkylenoxid gegebenenfalls in Gegenwart von $CO_2$ und/oder Inertgas (wie beispielsweise Stickstoff oder Argon) erfolgen kann, und wobei der Schritt (β) auch mehrfach erfolgen kann,

(γ) ein oder mehrere Alkylenoxide, ein oder mehrere cyclische Anhydride und Kohlendioxid zu der aus Schritt (β) resultierenden Mischung fortwährend dosiert werden [Polymerisationsstufe], wobei die für die Terpolymerisation eingesetzten Alkylenoxide bzw. cyclische Anhydride gleich oder verschieden sind von den bei Schritt (β) eingesetzten Alkylenoxiden bzw. cyclischen Anhydriden.

<u>Zu Schritt (α):</u>

Die Zugabe der einzelnen Komponenten in Schritt (α) kann gleichzeitig oder nacheinander in beliebiger Reihenfolge erfolgen; bevorzugt wird in Schritt (α) zunächst DMC-Katalysator vorgelegt und gleichzeitig oder anschließend H-funktionelle Starterverbindung zugesetzt.

Gegenstand einer bevorzugten Ausfiihrungsform ist ein Verfahren, wobei in Schritt (α)

(α1) in einem Reaktor der DMC-Katalysator und eine oder mehrere H-funktionelle Starterverbindungen vorgelegt werden,

(a2) durch den Reaktor bei einer Temperatur von 50 bis 200°C, bevorzugt von 80 bis 160°C, besonders bevorzugt von 125 bis 135°C ein Inertgas (beispielsweise Stickstoff oder ein Edelgas wie Argon), ein Inertgas-Kohlendioxid-Gemisch oder Kohlendioxid geleitet wird und gleichzeitig durch Entfernen des Inertgases oder Kohlendioxids (beispielsweise mit einer Pumpe) ein reduzierter Druck (absolut) von 10 mbar bis 800 mbar, bevorzugt von 40 mbar bis 200 mbar im Reaktor eingestellt wird [erste Aktivierungsstufe].

Gegenstand einer weiteren bevorzugten Ausführungsform ist ein Verfahren, wobei in Schritt (α)

(α1) die H-funktionelle Starterverbindung oder ein Gemisch aus mindestens zwei H-funktionellen Starterverbindungen, gegebenenfalls unter Inertgasatmosphäre (beispielsweise Stickstoff oder Argon), unter einer Atmosphäre aus Inertgas-Kohlendioxid-Gemisch oder unter einer reinen Kohlendioxid-Atmosphäre, besonders bevorzugt unter Inertgasatmosphäre (beispielsweise Stickstoff oder Argon) vorgelegt wird und

(a2) in das resultierende Gemisch aus DMC-Katalysator und einer oder mehrerer H-funktioneller Starterverbindungen bei einer Temperatur von 50 bis 200°C, bevorzugt von 80 bis 160°C, besonders bevorzugt von 125 bis 135°C ein Inertgas (beispielsweise Stickstoff oder ein Edelgas wie Argon), ein Inertgas-Kohlendioxid-Gemisch oder Kohlendioxid, besonders bevorzugt Inertgas (beispielsweise Stickstoff oder Argon) eingeleitet wird und gleichzeitig durch Entfernen des Inertgases oder Kohlendioxids (beispielsweise mit einer Pumpe) ein reduzierter Druck (absolut) von 10 mbar bis 800 mbar, bevorzugt von 40 mbar bis 200 mbar im Reaktor eingestellt wird [erste Aktivierungsstufe],

wobei der Doppelmetallcyanid-Katalysator zu der H-funktionellen Startersubstanz oder dem Gemisch von mindestens zwei H-funktionellen Startersubstanzen in Schritt (α1) oder unmittelbar anschließend in Schritt (α2) zugesetzt wird.

Der DMC-Katalysator kann in fester Form oder als Suspension in einer H-funktionellen Starterverbindung zugegeben werden. Wird der DMC-Katalysator als Suspension zugegeben, wird diese bevorzugt in Schritt (α1) der einen oder mehreren H-funktionellen Starterverbindungen zugefügt.

<u>Zu Schritt (β):</u>

Der Schritt der zweiten Aktivierungsstufe (Schritt (β)) kann in Gegenwart von $CO_2$ und/oder Inertgas (wie beispielsweise Stickstoff oder Argon) erfolgen. Bevorzugt erfolgt Schritt (β) unter einer Atmosphäre aus Inertgas-Kohlendioxid-Gemisch (beispielsweise Stickstoff-Kohlendioxid-Gemisch oder Argon-Kohlendioxid-Gemisch) oder einer Kohlendioxid-Atmosphäre, besonders bevorzugt unter Kohlendioxid-Atmosphäre. Das Einstellen einer Atmosphäre aus Inertgas-Kohlendioxid-Gemisch (beispielsweise Stickstoff-Kohlendioxid-Gemisch oder Argon-Kohlendioxid-Gemisch) oder einer Kohlendioxid-Atmosphäre und die Dosierung eines oder mehrerer Alkylenoxide können prinzipiell in unterschiedlicher Weise erfolgen. Der Vordruck wird bevorzugt durch Einleiten von Kohlendioxid eingestellt, wobei der Druck (absolut) 10 mbar bis 100 bar, vorzugsweise 100 mbar bis 50 bar und besonders bevorzugt 500 mbar bis 50 bar beträgt. Der Start der Dosierung des Alkylenoxids kann aus dem Vakuum heraus oder bei einem zuvor gewählten Vordruck erfolgen. Als Gesamtdruck (absolut) der Atmosphäre aus Inertgas-Kohlendioxid-Gemisch (beispielsweise Stickstoff-Kohlendioxid-Gemisch oder Argon-Kohlendioxid-Gemisch) oder einer Kohlendioxid-Atmosphäre und ggf. Alkylenoxid

wird in Schritt (β) vorzugsweise ein Bereich von 10 mbar bis 100 bar, vorzugsweise 100 mbar bis 50 bar und bevorzugt 500 mbar bis 50 bar eingestellt. Gegebenenfalls wird während oder nach der Dosierung des Alkylenoxids der Druck durch Einleiten von weiterem Kohlendioxid nachgeregelt, wobei der Druck (absolut) 10 mbar bis 100 bar, vorzugsweise 100 mbar bis 50 bar und bevorzugt 500 mbar bis 50 bar beträgt.

In einer bevorzugten Ausführungsform beträgt die bei der Aktivierung in Schritt (β) eingesetzte Menge von einem oder mehreren Alkylenoxiden 0,1 bis 25,0 Gew.%, bevorzugt 1,0 bis 20,0 Gew.%, besonders bevorzugt 2,0 bis 16,0 Gew.% (bezogen auf die im Schritt (α) eingesetzte Menge an Starterverbindung). Das Alkylenoxid kann in einem Schritt oder schrittweise in mehreren Teilmengen zugegeben werden.

In einer besonders bevorzugten Ausführungsform der Erfindung werden bei der Aktivierung in Schritt (β) eine Teilmenge (bezogen auf die Gesamtmenge der in den Schritten (β) und (μ) eingesetzten Menge an cyclischen Anhydriden) von einem oder mehreren cyclischen Anhydriden zu der aus Schritt (α) resultierenden Mischung zugesetzt wird [zweite Aktivierungsstufe], wobei diese Zugabe einer Teilmenge an Alkylenoxid gegebenenfalls in Gegenwart von $CO_2$ und/oder Inertgas (wie beispielsweise Stickstoff oder Argon) erfolgen kann, und wobei der Schritt (β) auch mehrfach erfolgen kann. Cyclische Anhydride und Alkylenoxide werden bei der Aktivierung in Schritt (β) in Molverhältnissen von 1 zu 2 bis 1 zu 100, vorzugsweise 1 zu 5 bis 1 zu 50, besonders bevorzugt in Molverhältnissen von 1 zu 5 bis 1 zu 25 eingesetzt. Das cyclische Anhydrid kann in einem Schritt oder schrittweise in mehreren Teilmengen zugegeben werden. Der DMC-Katalysator wird vorzugsweise in einer Menge eingesetzt, so dass der Gehalt an DMC-Katalysator im resultierenden Polyetherestercarbonatpolyol 10 bis 10000 ppm, besonders bevorzugt 20 bis 5000 ppm und höchst bevorzugt 50 bis 500 ppm beträgt.

Beim zweiten Aktivierungsschritt werden Alkylenoxid und gegebenfalls cyclisches Anhydrid beispielsweise in einer Portion oder innerhalb von 1 bis 15 Minuten, vorzugsweise 5 bis 10 Minuten zugegeben. Die Dauer des zweiten Aktivierungsschritts beträgt bevorzugt 15 bis 240 Minuten, besonders bevorzugt 20 bis 60 Minuten.

<u>Zu Schritt (γ):</u>

Die Dosierung eines oder mehrerer Alkylenoxide, eines oder mehrerer cyclischer Anhydride und des Kohlendioxids kann simultan, wechselweise oder sequentiell erfolgen, wobei die gesamte Kohlendioxidmenge auf einmal oder dosiert über die Reaktionszeit zugegeben werden kann. Es ist möglich, während der Zugabe des Alkylenoxids und des cyclischen Anhydrids den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung eines oder mehrerer Alkylenoxide, eines oder mehrerer cyclischer Anhydride bzw. des $CO_2$ erfolgt simultan, wechselweise oder sequentiell zur Kohlendioxid Dosierung. Es ist möglich, das Alkylenoxid und/oder das cyclische Anhydrid mit konstanter Dosierrate zu dosieren oder die Dosierrate allmählich oder schrittweise zu steigern oder zu senken oder das Alkylenoxid und/oder das cyclische Anhydrid portionsweise zuzugeben. Bevorzugt werden das Alkylenoxid und das cyclische Anhydrid mit konstanter Dosierrate dem Reaktionsgemisch zugegeben. Werden mehrere Alkylenoxide zur Synthese der Polyetherestercarbonatpolyole eingesetzt, so können die Alkylenoxide einzeln oder als Gemisch dosiert werden. Werden mehrere cyclische Anhydride zur Synthese der Polyetherestercarbonatpolyole eingesetzt, so können die cyclischen Anhydride einzeln oder als Gemisch dosiert werden. Die Dosierung der Alkylenoxide bzw. der cyclische Anhydride kann simultan, wechselweise oder sequentiell über jeweils separate Dosierungen (Zugaben) erfolgen oder über eine oder mehrere Dosierungen, wobei die Alkylenoxide bzw. die cyclische Anhydride einzeln oder als Gemisch dosiert werden können. Es ist auch möglich, ein oder mehrere Alkylenoxide als Gemisch mit einem oder mehreren cyclischen Anhydriden zu dosieren. In einer bevorzugten Ausführungsform wird das cyclische Anhydrid als Lösung in einem oder mehreren Alkylenoxiden dosiert. In einer bevorzugten Ausführungsform beträgt das Verhältnis der bei der Polymerisation in Schritt (γ) eingesetzte Menge von cyclischem Anhydrid und einem oder mehreren Alkylenoxiden 1 zu 2 bis 1 zu 100, vorzugsweise 1 zu 5 bis 1 zu 50, besonders bevorzugt 1 zu 5 bis 1 zu 25. Über die Art und/oder Reihenfolge der Dosierung der Alkylenoxide, cyclische Anhydride und/oder des Kohlendioxids ist es möglich, statistische, alternierende, blockartige oder gradientenartige Polyetherestercarbonatpolyole zu synthetisieren.

Vorzugsweise wird ein Überschuss an Kohlendioxid bezogen auf die berechnete Menge an eingebautem Kohlendioxid im Polyetherestercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyetherestercarbonatpolyole als vorteilhaft erwiesen. Es ist möglich, das Kohlendioxid kontinuierlich oder diskontinuierlich zuzuführen. Dies hängt davon ab, wie schnell die Alkylenoxide und das $CO_2$ verbraucht werden und ob das Produkt gegebenenfalls $CO_2$-freie Polyether-Blöcke oder Blöcke mit unterschiedlichem $CO_2$-Gehalt enthalten soll. Die Menge des Kohlendioxids (angegeben als Druck) kann bei der Zugabe der Alkylenoxide ebenso variieren. Je nach den gewählten Reaktionsbedingungen ist es möglich, das $CO_2$ im gasförmigen, flüssigen oder überkritischen Zustand in den Reaktor einzuleiten. $CO_2$ kann auch als Feststoff in den Reaktor gegeben werden und dann unter den gewählten Reaktionsbedingungen in

den gasförmigen, gelösten, flüssigen und/oder überkritischen Zustand übergehen.
In Schritt (γ) kann das Kohlendioxid beispielsweise in die Mischung eingeleitet werden durch

(i) Begasung des Reaktionsgemisches im Reaktor von unten,
(ii) Verwendung eines Hohlwellenrührers,
(iii) Kombination aus den Dosierungen gemäß (i) und (ii), und/oder
(iv) Begasung über die Flüssigkeitsoberfläche durch Einsatz mehrstufiger ausgeführter Rührorgane.

Schritt (γ) wird beispielsweise bei Temperaturen von 60 bis 150°C, vorzugsweise von 80 bis 120°C, ganz besonders bevorzugt von 90 bis 110°C durchgeführt. Werden Temperaturen unterhalb von 60°C eingestellt, kommt die Reaktion zum Erliegen. Bei Temperaturen oberhalb von 150°C steigt die Menge an unerwünschten Nebenprodukten stark an.
Die Begasung des Reaktionsgemisches im Reaktor gemäß (i) erfolgt bevorzugt über einen Begasungsring, eine Begasungsdüse oder über ein Gaseinleitungsrohr. Bei dem Begasungsring handelt es sich vorzugsweise um eine ringförmige Anordnung oder um zwei oder mehrere ringförmige Anordnungen von Begasungsdüsen, die bevorzugt am Boden des Reaktors und/oder an der Seitenwand des Reaktors angeordnet sind.
Der Hohlwellenrührer gemäß (ii) ist bevorzugt ein Rührer, bei dem das Gas über eine hohle Welle des Rührers in die Reaktionsmischung eingeleitet wird. Durch die Drehung des Rührers in der Reaktionsmischung (d.h. beim Mischen) entsteht an dem mit der Hohlwelle verbundenen Ende des Rührflügels ein Unterdruck derart, dass die Gasphase (enthaltend $CO_2$ und ggf. unverbrauchtes Alkylenoxid) aus dem über der Reaktionsmischung befindlichen Gasraum abgesaugt wird und über die Hohlwelle des Rührers in die Reaktionsmischung geleitet wird.
Die Begasung des Reaktionsgemisches gemäß (i), (ii), (iii) oder (iv) kann jeweils mit frisch zudosiertem Kohlendioxid erfolgen (und/oder kombiniert werden mit einer Absaugung des Gases aus dem Gasraum über der Reaktionsmischung und anschließender Rekompression des Gases. Beispielsweise wird das aus dem Gasraum über der Reaktionsmischung abgesaugte und komprimierte Gas, gegebenenfalls gemischt mit frischem Kohlendioxid und/oder Alkylenoxid, in das Reaktionsgemisches gemäß (i), (ii), (iii) und/oder (iv) eingeleitet. Bevorzugt wird über frisch zudosiertes Kohlendioxid der Druckabfall ausgeglichen, der über Einbau des Kohlendioxids, des cyclischen Anhydrids und des Alkylenoxids bei der Terpolymerisation in das Reaktionsprodukt entsteht.
Die Einleitung des Alkylenoxids kann separat oder zusammen mit dem $CO_2$ sowohl über die Flüssigkeitsoberfläche oder direkt in die flüssige Phase erfolgen. Bevorzugt erfolgt die Einleitung des Alkylenoxids direkt in die flüssige Phase, da dies den Vorteil hat, dass eine rasche Durchmischung des eingebrachten Alkylenoxids mit der flüssigen Phase erfolgt und so lokale Konzentrationsspitzen von Alkylenoxid vermieden werden. Die Einleitung in die flüssige Phase kann über ein oder mehrere Einleitungsrohre, eine oder mehrere Düsen oder eine oder mehrere ringförmige Anordnungen von Mehrfach-Dosierstellen erfolgen, die bevorzugt am Boden des Reaktors und/oder an der Seitenwand des Reaktors angeordnet sind.
Die drei Schritte (α), (β) und (γ) können in demselben Reaktor oder jeweils separat in unterschiedlichen Reaktoren durchgeführt werden. Besonders bevorzugte Reaktortypen sind Rührkessel, Rohrreaktor, und Schlaufenreaktor. Werden die Reaktionsschritte (α), (β) und (γ) in unterschiedlichen Reaktoren durchgeführt, kann für jeden Schritt ein unterschiedlicher Reaktortyp verwenden werden.
Polyetherestercarbonatpolyole können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit des Alkylenoxids und der cyclischen Anhydride zu achten. Sie ist so einzustellen, dass trotz der inhibierenden Wirkung des Kohlendioxids die Alkylenoxide und cyclischen Anhydride genügend schnell abreagieren. Die Konzentration an freien Alkylenoxiden in der Reaktionsmischung während der zweiten Aktivierungsstufe (Schritt β) beträgt vorzugsweise > 0 bis 100 Gew.%, besonders bevorzugt > 0 bis 50 Gew.%, höchst bevorzugt > 0 bis 20 Gew.% (jeweils bezogen auf das Gewicht der Reaktionsmischung). Die Konzentration an freien Alkylenoxiden in der Reaktionsmischung während der Reaktion (Schritt γ) beträgt vorzugsweise > 0 bis 40 Gew.%, besonders bevorzugt > 0 bis 25 Gew.%, höchst bevorzugt > 0 bis 15 Gew.% (jeweils bezogen auf das Gewicht der Reaktionsmischung).
Eine weitere mögliche Ausführungsform im Rührkessel (batch) für die Copolymerisation (Schritt γ) ist dadurch gekennzeichnet, dass auch eine oder mehrere H-funktionelle Starterverbindungen während der Reaktion kontinuierlich in den Reaktor zudosiert werden. Bei einer Durchführung des Verfahrens im semi-batch Betrieb beträgt die Menge der H-funktionellen Starterverbindungen, die während der Reaktion kontinuierlich in den Reaktor zudosiert werden, bevorzugt mindestens 20 mol% Äquivalente, besonders bevorzugt 70 bis 95 mol% Äquivalente (jeweils bezogen auf die gesamte Menge an H-funktionellen Starterverbindungen). Bei einer kontinuierlichen Durchführung des Verfahrens beträgt die Menge der H-funktionellen Starterverbindungen, die während der Reaktion kontinuierlich in den Reaktor zudosiert werden, bevorzugt mindestens 80 mol% Äquivalente, besonders bevorzugt 95 bis 99,99 mol% Äquivalente (jeweils bezogen

auf die gesamte Menge an H-funktionellen Starterverbindungen).

In einer bevorzugten Ausführungsform wird die gemäß den Schritten (α) und (β) aktivierte Katalysator-Starter-Mischung in demselben Reaktor weiter mit Alkylenoxiden und Kohlendioxid umgesetzt. In einer weiteren bevorzugten Ausführungsform wird die gemäß den Schritten (α) und (β) aktivierte Katalysator-Starter-Mischung in einem anderen Reaktionsbehältnis (beispielsweise einem Rührkessel, Rohrreaktor oder Schlaufenreaktor) weiter mit Alkylenoxiden und Kohlendioxid umgesetzt. In einer weiteren bevorzugten Ausführungsform wird die gemäß dem Schritt (α) vorbereitete Katalysator-Starter-Mischung in einem anderen Reaktionsbehältnis (beispielsweise einem Rührkessel, Rohrreaktor oder Schlaufenreaktor) gemäß den Schritten (β) und (γ) mit Alkylenoxiden, cyclischen Anhydriden und Kohlendioxid umgesetzt.

Bei Reaktionsführung in einem Rohrreaktor werden die gemäß dem Schritt (α) vorbereitete Katalysator-Starter-Mischung oder die gemäß den Schritten (α) und (β) aktivierte Katalysator-Starter-Mischung und gegebenenfalls weiterer Starter sowie Alkylenoxide, cyclische Anhydride und Kohlendioxid kontinuierlich durch ein Rohr gepumpt. Bei Verwendung einer gemäß dem Schritt (α) vorbereiteten Katalysator-Starter-Mischung erfolgt die zweite Aktivierungsstufe gemäß Schritt (β) im ersten Teil des Rohrreaktors und die Terpolymerisation gemäß Schritt (γ) im zweiten Teil des Rohrreaktors.

Die molaren Verhältnisse der Reaktionspartner variieren je nach gewünschtem Polymer. In einer bevorzugten Ausführungsform wird hierbei Kohlendioxid in seiner flüssigen oder überkritischen Form zudosiert, um eine optimale Mischbarkeit der Komponenten zu ermöglichen. Das Kohlendioxid kann am Eingang des Reaktors und/oder über Dosierstellen, die entlang dem Reaktor angeordnet sind, in dem Reaktor eingebracht werden. Eine Teilmenge der Alkylenoxide bzw. der cyclischen Anhydride kann am Eingang des Reaktors eingebracht werden. Die Restmenge der Alkylenoxide bzw. der cyclischen Anhydride wird bevorzugt über mehrere Dosierstellen, die entlang dem Reaktor angeordnet sind, in den Reaktor eingebracht. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern. Bevorzugt wird durch die Mischelemente zudosiertes $CO_2$, cyclisches Anhydrid und/oder Alkylenoxid mit der Reaktionsmischung vermischt. In einer alternativen Ausführungsform werden verschiedene Volumenelemente der Reaktionsmischung miteinander vermischt.

Schlaufenreaktoren können ebenfalls zur Herstellung von Polyetherestercarbonatpolyolen verwendet werden. Hierunter fallen im Allgemeinen Reaktoren mit interner und/oder externer Stoffrückführung (ggf. mit im Kreislauf angeordneten Wärmetauscherflächen), wie beispielsweise ein Strahlschlaufenreaktor, Jet-Loop Reaktor oder Venturi-Loop Reaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren oder mehreren hintereinander geschalteten Rührkesseln.

Um vollständigen Umsatz zu realisieren, ist dem Reaktionsapparat, in dem der Schritt (γ) durchgeführt wird, häufig ein weiterer Kessel oder ein Rohr ("Verweilrohr") nachgeschaltet, in dem nach der Reaktion vorhandene Restkonzentrationen freier Alkylenoxide abreagieren. Bevorzugt liegt der Druck in diesem nachgeschalteten Reaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 10 bis 150°C und besonders bevorzugt bei 20 bis 100°C. Das Reaktionsgemisch enthält am Ende der Nachreaktionszeit bzw. am Ausgang des nachgeschalteten Reaktors vorzugsweise weniger als 0,05 Gew.% Alkylenoxid. Die Nachreaktionszeit bzw. die Verweilzeit im nachgeschalteten Reaktor beträgt bevorzugt 10 min bis 24 h, besonders bevorzugt 10 min bis 3 h.

Die erfindungsgemäß erhaltenen Polyetherestercarbonatpolyole haben vorzugsweise eine OH-Funktionalität (d.h. durchschnittlich Anzahl von OH-Gruppen pro Molekül) von mindestens 0,8, bevorzugt von 1 bis 8, besonders bevorzugt von 1 bis 6 und ganz besonders bevorzugt von 2 bis 4. Das Molekulargewicht der erhaltenen Polyetherestercarbonatpolyole beträgt bevorzugt mindestens 400, besonders bevorzugt 400 bis 1000000 g/mol und höchst bevorzugt 500 bis 60000 g/mol.

Allgemein können für das erfindungsgemäße Verfahren **Alkylenoxide** (Epoxide) mit 2-45 Kohlenstoffatomen eingesetzt werden. Bei den Alkylenoxiden mit 2 - 45 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltrlisopropoxysilan. Vorzugsweise werden als Alkylenoxide Ethylenoxid und/oder Propylenoxid, insbesondere Propylenoxid eingesetzt.

Als **cyclische Anhydride** werden vorzugsweise Verbindungen der Formel (II), (III) oder (IV) eingesetzt,

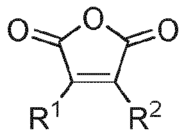
(II)

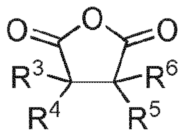
(III)

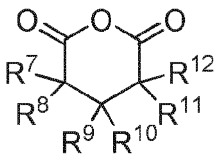
(IV)

wobei

R1 und R2 für Wasserstoff, Halogen, C1-C22-Alkyl, C1-C22-Alkenyl oder C6-C18-Aryl stehen oder R1 und R2 Glieder eines 4 bis 7 gliedrigen Rings oder polycyclischen Systems sein können, vorzugsweise ergeben R1 und R2 gemeinsam einen Benzolring,
R3, R4, R5 und R6 für Wasserstoff, C1-C22-Alkyl, C1-C22-Alkenyl oder C6-C18-Aryl stehen oder Glieder eines 4 bis 7 gliedrigen Rings oder polycyclischen Systems sein können und
R7, R8, R9, R10, R11 und R12 für Wasserstoff, C1-C22-Alkyl, C1-C22-Alkenyl oder C6-C18-Aryl stehen oder Glieder eines 4 bis 7 gliedrigen Rings oder polycyclischen Systems sein können, wobei die Verbindungen der Formel (II) und (III) und (IV) auch durch Chlor, Brom, Nitrogruppen oder Alkoxygruppen substituiert sein können.
Cyclische Anhydride im Sinne der Erfindungen sind auch vorzugsweise Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, und Allylnorbornendisäureanhydrid.

Als geeignete **H-funktionelle Starterverbindungen** (Starter) können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $NH_2$, besonders bevorzugt ist -OH. Als H-funktionelle Startersubstanz wird beispielsweise eine oder mehrere Verbindungen ausgewählt aus der Gruppe bestehend aus ein- oder mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z. B. sogenannte Jeffamine® von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).
Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, *tert*-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-*tert*-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, *tert*-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure,

Acrylsäure.
Als H-funktionelle Startersubstanzen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton.

Die H-funktionellen Startersubstanzen können auch aus der Substanzklasse der Polyetherpolyole ausgewählt sein, insbesondere solchen mit einem Molekulargewicht $M_n$ im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyether-Polyole der Bayer MaterialScience AG (wie z. B. Desmophen® 3600Z, Desmophen® 1900U, Acclaim® Polyol 2200, Acclaim® Polyol 40001, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.
Die H-funktionellen Startersubstanzen können auch aus der Substanzklasse der Polyesterpolyole ausgewählt sein, insbesondere solchen mit einem Molekulargewicht $M_n$ im Bereich von 200 bis 4500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Bevorzugt werden Polyetherpolyole mit $M_n$ = 150 bis 2000 g/mol zur Herstellung der Polyesteretherpolyole eingesetzt.
Des weiteren können als H-funktionelle Startersubstanzen Polycarbonatdiole eingesetzt werden, insbesondere solche mit einem Molekulargewicht $M_n$ im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177. Beispielsweise können als Polycarbonatdiole die Desmophen® C-Typen der Bayer MaterialScience AG verwendet werden, wie z. B. Desmophen® C 1100 oder Desmophen® C 2200. In einer weiteren Ausführungsform der Erfindung können Polyethercarbonatpolyole und/oder Polyetherestercarbonatpolyole als H-funktionelle Startersubstanzen eingesetzt werden. Insbesondere werden Polyetherestercarbonatpolyole, die nach dem hier beschriebenen erfindungsgemäßen Verfahren erhältlich sind, eingesetzt. Diese als H-funktionelle Startersubstanzen eingesetzten Polyetherestercarbonatpolyole werden hierzu in einem separaten Reaktionsschritt zuvor hergestellt. Die H-funktionellen Startersubstanzen weisen im Allgemeinen eine OH-Funktionalität (d.h. Anzahl an für die Polymerisation aktiven H-Atomen pro Molekül) von 1 bis 8, bevorzugt von 2 bis 6 und besonders bevorzugt von 2 bis 4 auf. Die H-funktionellen Startersubstanzen werden entweder einzeln oder als Gemisch aus mindestens zwei H-funktionellen Startersubstanzen eingesetzt. Bevorzugte H-funktionelle Startersubstanzen sind Alkohole der allgemeinen Formel (V),

$$HO\text{-}(CH_2)_x\text{-}OH \qquad (V)$$

wobei x eine Zahl von 1 bis 20, bevorzugt eine gerade Zahl von 2 bis 20 ist. Beispiele für Alkohole gemäß Formel (V) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (V) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit

ε-Caprolacton. Weiterhin bevorzugt werden als H-funktionelle Starterverbindungen Wasser, Diethylenglykol, Dipropylenglykol, Rizinusöl, Sorbit und Polyetherpolyole, aufgebaut aus sich wiederholenden Polyalkylenoxideinheiten, eingesetzt. Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Starterverbindung und Propylenoxid bzw. einer di- oder tri-H-funktionellen Starterverbindung, Propylenoxid und Ethylenoxid aufgebaut ist. Die Polyetherpolyole haben bevorzugt eine OH-Funktionalität von 2 bis 4 und ein Molekulargewicht $M_n$ im Bereich von 62 bis 4500 g/mol und insbesondere ein Molekulargewicht $M_n$ im Bereich von 62 bis 3000 g/mol.

**Doppelmetallcyanid (DMC)-Katalysatoren** zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonatpolyolen bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. *tert*-Butanol) noch einen Polyether mit einem zahlenmittlerem Molekulargewicht größer als 500 g/mol enthalten.

Die erfindungsgemäßen DMC-Katalysatoren werden vorzugsweise erhalten, indem man

(a) im ersten Schritt eine wässrige Lösung eines Metallsalzes mit der wässrigen Lösung eines Metallcyanidsalzes in Gegenwart eines oder mehrer organischen Komplexliganden, z.B. eines Ethers oder Alkohols, umsetzt,

(b) wobei im zweiten Schritt der Feststoff aus der aus (i) erhaltenen Suspension durch bekannte Techniken (wie Zentrifugation oder Filtration) abgetrennt wird,

(c) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),

(d) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäßen DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder tert-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze besitzen bevorzugt die allgemeine Formel (VI),

$$M(X)_n \qquad (VI)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

n ist 1, wenn X = Sulfat, Carbonat oder Oxalat ist und

n ist 2, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (VII),

$$M_r(X)_3 \qquad (VII)$$

wobei

M ausgewählt ist aus den Metallkationen $Fe^{3+}$, $Al^{3+}$, $Co^{3+}$ und $Cr^{3+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (VIII),

$$M(X)_s \qquad (VIII)$$

wobei

M ausgewählt ist aus den Metallkationen $Mo^{4+}$, $V^{4+}$ und $W^{4+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (IX),

$$M(X)_t \qquad (IX)$$

wobei

M ausgewählt ist aus den Metallkationen $Mo^{6+}$ und $W^{6+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Carboxylat, Cyanat, Thiocyanat, Isocyanat, Isothiocyanat oder Nitrat ist.

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (X)

$$(Y)_aM'(CN)_b(A)_c \qquad (X)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und
V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$) und Erdalkalimetall (d.h. $Be^{2+}$, $Mg^{2+}$, $Ca^{2+}$, $Sr^{2+}$, $Ba^{2+}$),
A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).

Bevorzugte Doppelmetallcyanid-Verbindungen, die in den erfindungsgemäßen DMC-Katalysatoren enthalten sind, sind Verbindungen der allgemeinen Formel (XI)

$$M_x[M'_{x'}(CN)_y]_z \qquad (XI)$$

worin M wie in Formel (VI) bis (IX) und

M' wie in Formel (X) definiert ist, und
x, x', y und z sind ganzzahlig und so gewählt, dass die Elektronenneutralität der Doppelmetallcyanidverbindung gegeben ist.
Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, *tert*-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-*tert*-butylether, Diethylenglykol-mono-*tert*-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert-butylether und 3-Methyl-3-oxetan-methanol.

Es wurde nun überraschenderweise gefunden, dass die oben gestellte Aufgabe bsonders vorteilhaft gelöst wird durch ein Verfahren zur Herstellung von Polyetherestercarbonatpolyolen durch katalytische Anlagerung von Kohlendioxid, Alkylenoxiden und cyclischen Anhydriden an eine oder mehreren H-funktionellen Startersubstanzen in Gegenwart mindestens eines Doppelmetallcyanid-Katalysators, wobei der Doppelmetallcyanid-Katalysator mindestens einen ungesättigten Alkohol (d.h. einen Alkohol enthaltend mindestens eine C=C oder eine C≡C-Bindung) als organischen Komplexliganden enthält.

Eine bevorzugte Ausführungsform der vorliegenden Erfindung ist somit ein Verfahren zur Herstellung von Polyetherestercarbonatpolyolen durch katalytische Anlagerung von Kohlendioxid, Alkylenoxiden und cyclischen Anhydriden an eine oder mehreren H-funktionellen Startersubstanzen in Gegenwart mindestens eines DMC-Katalysators, dadurch gekennzeichnet, dass der DMC-Katalysator dadurch hergestellt wird, dass eine wässrige Lösung eines cyanidfreien Metallsalzes mit der wässrigen Lösung eines Metallcyanidsalzes in Gegenwart eines oder mehrerer organischen Komplexliganden stammend aus der Klasse der ungesättigten Alkohole umgesetzt wird, wobei der/die ungesättigte(n) Alkohol(e) bevorzugt entweder in der wässrigen Lösung des cyanidfreien Metallsalzes, der wässrigen Lösung des Metallcyanidsalzes oder in beiden wässrigen Lösungen enthalten sind.

Ungesättigte Alkohole im Sinne dieser Erfindung sind beispielsweise solche der Formel $(R^1)(R^2)(R^3)C(OH)$, wobei $R^1$ eine Kohlenwasserstoffgruppe aus 2 bis 20 Kohlenstoffatomen ist mit mindestens einer C=C und/oder mindestens einer C≡C-Gruppe, und wobei vorzugsweise einer der Kohlenstoffatome der C=C oder der C≡C-Gruppe an den Kohlenstoff gebunden ist, der die Hydroxylgruppe trägt, und wobei ein oder mehrere Wasserstoffatome der Kohlenwasserstoffgruppe durch Atome verschieden von Kohlenstoff oder Wasserstoff ersetzt sein können, sowie $R^2$ und $R^3$ unabhängig voneinander Wasserstoff, $C_1$ bis $C_{20}$- Alkyl (wie beispielsweise Methyl, Ethyl, Propyl, Butyl, Pentyl, Hexyl), $C_3$ bis $C_{12}$-Cycloalkyl, Phenyl oder eine Kohlenwasserstoffgruppe aus 2 bis 20 Kohlenstoffatomen mit mindestens einer C=C und/oder mindestens einer C≡C-Gruppe sind, wobei vorzugsweise einer der Kohlenstoffatome der C=C oder der C≡C-Gruppe an den Kohlenstoff gebunden ist, der die Hydroxylgruppe trägt, wobei jeweils ein oder mehrere Wasserstoffatome der

Kohlenwasserstoffgruppe durch Atome verschieden von Kohlenstoff oder Wasserstoff ersetzt sein können.

Bevorzugte ungesättigte Alkohole sind 3-Buten-1-ol, 3-Butin-1-ol, 2-Propen-1-ol, 2-Propin-1-ol, 2-Methyl-3-buten-2-ol, 2-Methyl-3-butin-2-ol, 3-Buten-1-ol, 3-Butin-1-ol, 3-Methyl-1-penten-3-ol und 3-Methyl-1-pentin-3-ol. Es ist hierbei auch möglich, dass ein oder mehrere der Wasserstoffatome in den ungesättigten Alkoholen gegen Halogenatome (F, Cl, Br, I) ersetzt ist. Besonders bevorzugte ungesättigte Alkohole sind 2-Methyl-3-buten-2-ol, 2-Methyl-3-butin-2-ol und 3-Methyl-1-pentin-3-ol. Höchst bevorzugt ist 3-Methyl-1-pentin-3-ol.

Optional werden bei der Herstellung der erfindungsgemäßen DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der erfindungsgemäßen DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz, also mindestens ein molares Verhältnis von Metallsalz zu Metallcyanidsalz von 2,25 zu 1,00) und des Metallcyanidsalzes (z.B. Kaliumhexacyanocobaltat) in Gegenwart des organischen Komplexliganden (z.B. *tert*-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.
Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators, wie beispielsweise in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.
In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Gew.%, bezogen auf die Gesamtlösung.
Optional wird im dritten Schritt der wässrigen Waschlösung weitere komplexbildende Komponente, bevorzugt im Bereich zwischen 0,5 und 5 Gew.%, bezogen auf die Gesamtlösung, zugefügt.
Außerdem ist es vorteilhaft, den isolierten Feststoff mehr als einmal zu waschen. Vorzugsweise wird in einem ersten Waschschritt (iii-1) mit einer wässrigen Lösung des organischen Komplexliganden gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäßen Katalysator zu entfernen. Besonders bevorzugt liegt die Menge des organischen Komplexliganden in der wässrigen Waschlösung zwischen 40 und 80 Gew.%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nichtwässrige Lösung, wie z.B. eine Mischung oder Lösung aus organischen Komplexliganden und weiterer komplexbildender Komponente (bevorzugt im Bereich zwischen 0,5 und 5 Gew.%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.
Der isolierte und gegebenenfalls gewaschene Feststoff wird anschließend, gegebenenfalls nach Pulverisierung, bei Temperaturen von im allgemeinen 20 - 100°C und bei Drücken von im Allgemeinen 0,1 mbar bis Normaldruck (1013 mbar) getrocknet.
Ein bevorzugtes Verfahren zur Isolierung der erfindungsgemäßen DMC-Katalysatoren aus der Suspension durch Filtration, Filterkuchenwäsche und Trocknung wird in WO-A 01/80994 beschrieben.

Die nach dem erfindungsgemäßen Verfahren erhältlichen Polyetherestercarbonatpolyole können problemlos verarbeitet werden, insbesondere durch Umsetzung mit Di- und/oder Polyisocyanaten zu Polyurethanen, insbesondere zu Polyurethan-Weichschaumstoffen, Polyurethan-Hartschaumstoffen, Polyurethan-Elastomeren oder Polyurethan-Beschichtungen. Für Polyurethananwendungen werden vorzugsweise Polyetherestercarbonatpolyole eingesetzt, die auf einer H-funktionellen Starterverbindung basieren, welche eine Funktionalität von mindestens 2 besitzt. Des Weiteren können die nach dem erfindungsgemäßen Verfahren erhältlichen Polyetherestercarbonatpolyole in Anwendungen wie Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung oder kosmetischen Formulierungen verwendet werden. Dem Fachmann ist bekannt, dass abhängig vom jeweiligen Anwendungsgebiet die zu verwendenden Polyethercarbonatpolyole gewisse Stoffeigenschaften wie beispielsweise Molekulargewicht, Viskosität, Funktionalität und/oder Hydroxylzahl erfüllen müssen.

## Beispiele

Eingesetzte H-funktionelle Startersubstanz (Starter):
PET-1 difunktionelles Poly(oxypropylen)polyol mit einer OH-Zahl von 112 $mg_{KOH}/g$

Eingesetzte Epoxide:

PO Propylenoxid
SO Styroloxid

Eingesetzte Anhydride:

MA Maleinsäureanhydrid
PA Phthalsäureanhydrid

Eingesetzte DMC-Katalysatoren:

DMC-1 Dieser DMC-Katalysator wurde hergestellt nach Beispiel 6 von WO-A 01/80994.

DMC-$SiO_2$ Der DMC-SiO2-Katalysator wurde hergestellt gemäß Green Chemistry 14 (2012) 1168 unter Verwendung von 24 µl wässriger HCl-Lösung (0.001 M).

DMC-$TiO_2$ Der DMC-$TiO_2$-Katalysator wurde entsprechend dem DMC-$SiO_2$-Katalysator hergestellt, wobei das Tetraethylorthosilikat ersetzt wurde durch eine äquimolare Menge an Titan(IV)ethoxid.

DMC-2 Der DMC-Katalysator wurde mit einer Apparatur gemäß Fig. 4 aus WO-A 01/39883 hergestellt. In einem Schlaufenreaktor, der einen Strahldispergator gemäß Fig. 2 aus WO-A 01/39883 mit einer Bohrung (Durchmesser 0,7 mm) enthält, wurde eine Lösung aus 258 g Zinkchlorid in 937 g destilliertem Wasser und 135 g 3-Methyl-1-pentin-3-ol bei 50°C zirkuliert. Hierzu wurde eine Lösung aus 26 g Kaliumhexacyanocobaltat (0,078 mol) in 332 g destilliertem Wasser zudosiert. Der Druckverlust im Strahldispergator betrug dabei 2,5 bar. Anschließend wurde die gebildete Dispersion 60 min bei 50°C und einem Druckverlust im Strahldispergator von 2,5 bar zirkuliert. Danach wurde eine Mischung aus 5,7 g 3-Methyl-1-pentin-3-ol, 159 g destilliertem Wasser und 27,6 g Polypropylenglykol 1000 zudosiert und die Dispersion dann 80 min bei 50°C und einem Druckverlust im Strahldispergator von 2,5 bar zirkuliert. 230 g der erhaltenen Dispersion wurden in einer Drucknutsche mit 20 $cm^3$ Filterfläche filtriert und anschließend mit einer Mischung aus 82 g 3-Methyl-1-pentin-3-ol, 42,3 g destilliertem Wasser und 1,7 g Polypropylenglykol 1000 gewaschen. Der gewaschene Filterkuchen wurde mechanisch zwischen 2 Streifen Filterpapier abgepresst und abschließend für 2 h bei 60°C im Hochvakuum bei ca. 0,05 bar (absolut) getrocknet.

Die Polymerisationsreaktionen wurden in einem 300 ml Druckreaktor der Fa. Parr durchgeführt. Der in den Beispielen eingesetzte Druckreaktor hatte eine Höhe (innen) von 10,16 cm und einen Innendurchmesser von 6,35 cm. Der Reaktor war ausgestattet mit einem elektrischen Heizmantel (510 Watt maximale Heizleistung). Die Gegenkühlung bestand in einem U-förmig gebogenen Tauchrohr mit 6 mm Außendurchmesser, das bis 5 mm über den Boden in den Reaktor ragte und das mit Kühlwasser von ca. 10°C durchströmt wurde. Der Wasserstrom wurde über ein Magnetventil ein- und ausgeschaltet. Weiterhin war der Reaktor mit einem Einleitrohr sowie einem Thermofühler mit 1,6 mm Durchmesser ausgestattet, die bis 3 mm über den Boden in den Reaktor ragten.

Die Heizleistung des elektrischen Heizmantels lag während der Aktivierung [erste Aktivierungsstufe] im Durchschnitt bei ca. 20% der maximalen Heizleistung. Durch die Regelung schwankte die Heizleistung um ±5% der maximalen Heizleistung. Das Auftreten einer erhöhten Wärmeentwicklung im Reaktor, hervorgerufen durch die rasche Umsetzung von Alkylenoxid während der Aktivierung des Katalysators [zweite Aktivierungsstufe], wurde beobachtet über eine reduzierte Wärmeleistung des Heizmantels, Einschalten der Gegenkühlung und gegebenenfalls einen Temperaturanstieg im Reaktor. Das Auftreten einer Wärmeentwicklung im Reaktor, hervorgerufen durch die kontinuierliche Umsetzung von Alkylenoxid während der Reaktion [Polymerisationsstufe] führte zu einem Absenken der Leistung des Heizmantels auf ca. 8% der maximalen Heizleistung. Durch die Regelung schwankte die Heizleistung um ±5% der maximalen Heizleistung.

Bei dem in den Beispielen eingesetzten Gaseintragsrührer handelte es sich um einen Hohlwellenrührer, bei dem das Gas über eine hohle Welle des Rührers in die Reaktionsmischung eingeleitet wurde. Der auf der Hohlwelle angebrachte Rührkörper wies vier Arme auf, hatte einen Durchmesser von 35 mm und eine Höhe von 14 mm. An jedem Ende des Arms waren zwei Gasauslässe angebracht, die einen Durchmesser von 3 mm aufwiesen. Durch die Drehung des Rührers entstand ein Unterdruck derart, dass das über der Reaktionsmischung befindliche Gas ($CO_2$ und ggf. Alkylenoxid) abgesaugt wurde und über die Hohlwelle des Rührers in die Reaktionsmischung eingeleitet wurde. Die Bezeichnung rpm bezieht sich auf die Anzahl der Umdrehungen des Rührers pro Minute.

Bei dem in einigen Beispielen eingesetzten Impellerrührer handelte es sich um eine Schrägblatt-Turbine, bei dem auf der Rührwelle im Abstand von 7 mm insgesamt zwei Rührstufen mit jeweils vier Rührflügeln (45°) angebracht waren, die einen Durchmesser von 35 mm und eine Höhe von 10 mm aufwiesen.

a) Bei der Terpolymerisation von Propylenoxid, Anhydriden und $CO_2$ resultierte neben dem cyclischen Propylencarbonat das Polyetherestercarbonatpolyol, welches einerseits in Formel (XIIa) gezeigte Polycarbonat-Einheiten enthält,

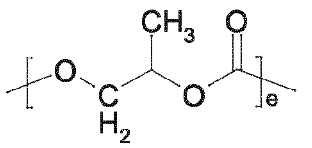 bzw. 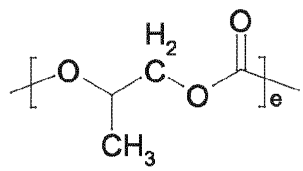

(XIIa)

und andererseits in Formel (XIIb) gezeigte Polyether-Einheiten enthält.

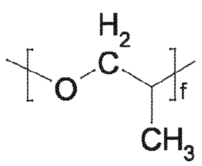 bzw. 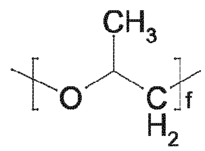

(XIIb)

Die Charakterisierung des Reaktionsgemisches erfolgte durch $^1$H-NMR Spektroskopie und Gelpermeations-Chromatographie.

Das Verhältnis der Menge an cyclischem Propylencarbonat zu Polyetherestercarbonatpolyol (Selektivität; Verhältnis g/e) sowie der Anteil der nicht umgesetzten Monomere (Propylenoxid $R_{PO}$, Maleinsäureanhydrid $R_{MA}$ in mol%) wurden mittels $^1$H-NMR Spektroskopie bestimmt. Dazu wurde jeweils eine Probe der nach der Reaktion erhaltenen Reaktionsmischung in deuteriertem Chloroform gelöst und auf einem Spektrometer der Firma Bruker (AV400, 400 MHz) vermessen.

Anschließend wurde die Reaktionsmischung mit Dichlormethan (20 ml) verdünnt und die Lösung durch einen Fallfilmverdampfer geleitet. Die Lösung (0,1 kg in 3 h) lief entlang der inneren Wand eines von außen auf 120°C beheizten Rohres mit 70 mm Durchmesser und 200 mm Länge herab, wobei die Reaktionsmischung durch drei mit einer Geschwindigkeit von 250 U/min rotierende Rollen mit 10 mm Durchmesser jeweils gleichmäßig als dünner Film auf der inneren Wand des Fallfilmverdampfers verteilt wurde. Im Inneren des Rohres wurde über eine Pumpe ein Druck von 3 mbar eingestellt. Die von leicht flüchtigen Bestandteilen (nicht umgesetzte Epoxide, cyclisches Carbonat, Lösungsmittel) gereinigte Reaktionsmischung wurde am unteren Ende des beheizten Rohres in einer Vorlage aufgefangen.

Das molare Verhältnis von Carbonatgruppen zu Ethergruppen im Polyetherestercarbonatpolyol (Verhältnis e/f) sowie der molare Anteil von in das Polymer eingebautem Anhydrid wurden mittels $^1$H-NMR Spektroskopie bestimmt. Eine Probe der gereinigten Reaktionsmischung wurde dazu jeweils in deuteriertem Chloroform gelöst und auf einem

Spektrometer der Firma Bruker (AV400, 400 MHz) vermessen.
Die relevanten Resonanzen im $^1$H-NMR Spektrum (bezogen auf TMS = 0 ppm), die zur Integration verwendet wurden, sind wie folgt:

I1: 1,10 - 1,17: Methylgruppe der Polyether-Einheiten, Fläche der Resonanz entspricht drei H Atomen
I2: 1,25 - 1,34: Methylgruppe der Polycarbonat-Einheiten, Fläche der Resonanz entspricht drei H Atomen
I3: 1,45 - 1,48: Methylgruppe des cyclischen Carbonats, Fläche der Resonanz entspricht drei H Atomen
I4: 2,95 - 3,00: CH Gruppe für freies, nicht abreagiertes Propylenoxid, Fläche der Resonanz entspricht einem H Atom
I5: 6,22-6,29: CH Gruppe der in das Polymer über den Einbau von Maleinsäureanhydrid erhaltenen Doppelbindung, Fläche der Resonanz entspricht zwei H Atomen
I6: 7,05: CH Gruppe für freies, nicht abreagiertes Maleinsäureanhydrid, Fläche der Resonanz entspricht zwei H Atomen

Angegeben sind das molare Verhältnis der Menge an cyclischem Propylencarbonat zu Carbonat-Einheiten im Polyetherestercarbonatpolyol (Selektivität g/e) und das molare Verhältnis von Carbonatgruppen zu Ethergruppen im Polyetherestercarbonatpolyol (e/f) sowie die Anteile des nicht umgesetzten Propylenoxids (in mol%) und Maleinsäureanhydrids (in mol%).
Unter Berücksichtigung der relativen Intensitäten wurden die Werte wie folgt berechnet:
Molares Verhältnis der Menge an cyclischem Propylencarbonat zu Carbonat-Einheiten im Polyetherestercarbonatpolyol (Selektivität g/e):

$$g/e = I3 / I2 \qquad \text{(XIII)}$$

Molares Verhältnis von Carbonatgruppen zu Ethergruppen im Polyetherestercarbonatpolyol (e/f):

$$e/f = I2 / I1 \qquad \text{(XIV)}$$

Der Anteil an Carbonateinheiten in den Wiederholungseinheiten des Polyetherestercarbonatpolyols:

$$A_{Carbonat} = [(I2/3) / ((I1/3)+(I2/3)+(I5/2)))] \times 100\% \qquad \text{(XV)}$$

Der Anteil der über den Einbau des Maleinsäureanhydrids resultierenden Doppelbindungen in den Wiederholungseinheiten des Polyetherestercarbonatpolyols:

$$A_{Doppelbindung} = [(I5/2) / ((I1/3)+(I2/3)+(I5/2)))] \times 100\% \qquad \text{(XVI)}$$

Der molare Anteil des nicht umgesetzten Propylenoxids ($R_{PO}$ in mol%) bezogen auf die Summe der bei der Aktivierung und der Copolymerisation eingesetzten Menge an Propylenoxid, berechnet sich nach der Formel:

$$R_{PO} = [I4 / ((I1/3)+(I2/3)+(I3/3)+I4))] \times 100\% \qquad \text{(XVII)}$$

Der molare Anteil des nicht umgesetzten Maleinsäureanhydrids ($R_{MA}$ in mol%) bezogen auf die Summe der bei der Aktivierung und der Copolymerisation eingesetzten Menge an Maleinsäureanhydrid, berechnet sich nach der Formel:

$$R_{MA} = [I6 / (I5 + I6)] \times 100\% \qquad \text{(XVIII)}$$

b) Bei der Terpolymerisation von Styroloxid, Anhydriden und $CO_2$ resultierte neben dem cyclischen Styrolcarbonat das Polyetherestercarbonatpolyol, welches einerseits in Formel (XIXa) gezeigte Polycarbonat-Einheiten enthält,

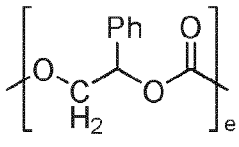 bzw. 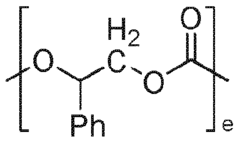 (XIXa)

und andererseits in Formel (XIXb) gezeigte Polyether-Einheiten enthält.

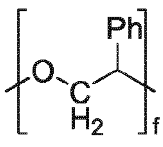 bzw. 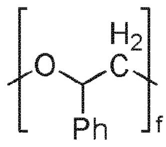 (XIXb)

Die relevanten Resonanzen im $^1$H-NMR Spektrum (bezogen auf TMS = 0 ppm), die zur Integration verwendet wurden, sind wie folgt:

I7: 4,8: Methingruppe der Polyether-Einheiten, Fläche der Resonanz entspricht einem H Atom
I8: 6,2: Methingruppe der Polycarbonat-Einheiten, Fläche der Resonanz entspricht einem H Atom
I9: 5,3: Methingruppe der Polyester-Einheiten in Nachbarschaft zu den in das Polymer eingebauten Phthalsäureanhydrid-Gruppe, Fläche der Resonanz entspricht einem H Atom
I10: 5,7: Methingruppe des cyclischen Styrolcarbonats, Fläche der Resonanz entspricht einem H Atom
I11: 2,8: CH Gruppe für freies, nicht abreagiertes Styroloxid, Fläche der Resonanz entspricht einem H Atom
I12: 7,68: aromatische CH Gruppe der in das Polymer über den Einbau von Phthalsäureanhydrid erhaltenen Benzolringe, Fläche der Resonanz entspricht zwei H Atomen
I13: 7,99: aromatische CH Gruppe für freies, nicht abreagiertes Phthalsäureanhydrid, Fläche der Resonanz entspricht zwei H Atomen

Angegeben sind das molare Verhältnis der Menge an cyclischem Styrolcarbonat (4-Phenyl-1,3-dioxolan-2-on) zu Carbonat-Einheiten im Polyetherestercarbonatpolyol (Selektivität g'/e') und das molare Verhältnis von Carbonatgruppen zu Ethergruppen im Polyetherestercarbonatpolyol (e'/f) sowie die Anteile des nicht umgesetzten Styroloxids (in mol%) und Phthalsäureanhydrids (in mol%).
Unter Berücksichtigung der relativen Intensitäten wurden die Werte wie folgt berechnet:
Molares Verhältnis der Menge an cyclischem Styrolcarbonat zu Carbonat-Einheiten im Polyetherestercarbonatpolyol (Selektivität g'/e'):

$$g'/e' = I10 / I8 \qquad \text{(XX)}$$

Molares Verhältnis von Carbonatgruppen zu Ethergruppen im Polyetherestercarbonatpolyol (e'/f):

$$e'/f' = I8 / I7 \qquad \text{(XXI)}$$

Der Anteil an Carbonateinheiten in den Wiederholungseinheiten des Polyetherestercarbonatpolyols:

$$A_{Carbonat}' = [I8 / (I7 + I8 + I9)] \times 100\% \qquad \text{(XXII)}$$

Der molare Anteil des nicht umgesetzten Styroloxids (Rso in mol%) bezogen auf die Summe der bei der Aktivierung und der Copolymerisation eingesetzten Menge an Styroloxid, berechnet sich nach der Formel:

$$R_{SO} = [I11 / (I7 + I8 + I9)] \times 100\% \qquad \text{(XXIII)}$$

Der molare Anteil des nicht umgesetzten Phthalsäureanhydrids ($R_{PA}$ in mol%) bezogen auf die Summe der bei der Aktivierung und der Copolymerisation eingesetzten Menge an Phthalsäureanhydrid, berechnet sich nach der Formel:

$$R_{PA} = [I13 / (I12 + I13)] \times 100\% \qquad (XXIV)$$

Das Zahlenmittel $M_n$ und das Gewichtsmittel $M_w$ des Molekulargewichts der entstandenen Polyetherestercarbonatpolyole wurde mittels Gelpermeations-Chromatographie (GPC) bestimmt. Es wurde vorgegangen nach DIN 55672-1: "Gelpermeationschromatographie, Teil 1 - Tetrahydrofuran als Elutionsmittel" (SECurity GPC-System von PSS Polymer Service, Flussrate 1.0 ml/min; Säulen: 2xPSS SDV linear M, 8x300 mm, 5 µm; RID-Detektor). Dabei wurden Polystyrolproben bekannter Molmasse zur Kalibrierung verwendet. Die Polydispersität wurde als das Verhältnis $M_w/M_n$ berechnet.

Die OH-Zahl (Hydroxylzahl) wurde in Anlehnung an DIN 53240-2 bestimmt, wobei jedoch N-Methylpyrrolidon anstelle von THF/Dichlormethan als Lösemittel verwendet wurde. Es wurde mit 0,5 molarer ethanolischer KOH Lösung titriert (Endpunktserkennung mittels Potentiometrie). Als Prüfsubstanz diente Rizinusöl mit durch Zertifikat festgelegter OH-Zahl. Die Angabe der Einheit in "$mg_{KOH}$/g" bezieht sich auf mg[KOH]/g[Polyetherestercarbonatpolyol].

Beispiel 1 (Terpolymerisation von Propylenoxid, Maleinsäureanhydrid und $CO_2$)

In einem 300 ml Druckreaktor ausgestattet mit einem Gaseintragsrührer wurde eine Mischung aus Katalysator DMC-1 (16 mg) und PET-1 (20 g) vorgelegt und 30 min bei 130°C in einem partiellen Vakuum (50 mbar) unter Durchleiten von Argon durch die Reaktionsmischung gerührt [erste Aktivierungsstufe]. Nach Aufpressen von 15 bar $CO_2$, wobei ein leichter Temperaturabfall zu beobachten war, und Wiedererreichen einer Temperatur von 130°C wurden 2,0 g einer Monomermischung (6,5 Gew.% Maleinsäureanhydrid [entsprechend 4,1 Mol%] gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 2,0 g einer Monomermischung wurde ein zweites und drittes Mal wiederholt [zweite Aktivierungsstufe]. Nach Abkühlen auf 100°C wurden weitere 54,0 g der Monomermischung (6,5 Gew.% Maleinsäureanhydrid gelöst in Propylenoxid) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt [Polymerisationsstufe]. Die Reaktion durch Kühlung des Reaktors mit Eiswasser gestoppt.

Das resultierende Gemisch war frei von den eingesetzten Monomeren Propylenoxid und Maleinsäureanhydrid.
Die Selektivität g/e betrug 0,05.
Die Selektivität e/f war 0,32. Dies entspricht einem Anteil von Carbonateinheiten in 23,5% der Wiederholungseinheiten des Polyetherestercarbonatpolyols ($A_{Carbonat}$).
Über den Einbau des Maleinsäureanhydrids resultierten Doppelbindungen in 2,7% der Wiederholungseinheiten des Polyetherestercarbonatpolyols ($A_{Doppelbindung}$).
Die Molmasse $M_n$ betrug 5293 g/mol bei einer Polydispersität von 1,7.
Die OH-Zahl betrug 24,9 $mg_{KOH}$/g.

Beispiel 2 (Terpolymerisation von Propylenoxid, Maleinsäureanhydrid und $CO_2$ unter Einsatz einer erhöhten Menge Maleinsäureanhydrid)

In einem 300 ml Druckreaktor ausgestattet mit einem Gaseintragsrührer wurde eine Mischung aus Katalysator DMC-1 (16 mg) und PET-1 (20 g) vorgelegt und 30 min bei 130°C in einem partiellen Vakuum (50 mbar) unter Durchleiten von Argon durch die Reaktionsmischung gerührt [erste Aktivierungsstufe]. Nach Aufpressen von 15 bar $CO_2$, wobei ein leichter Temperaturabfall zu beobachten war, und Wiedererreichen einer Temperatur von 130°C wurden 2,0 g einer Monomermischung (13,3 Gew.% Maleinsäureanhydrid [entsprechend 8,4 Mol%] gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 2,0 g einer Monomermischung wurde ein zweites und drittes Mal wiederholt [zweite Aktivierungsstufe]. Nach Abkühlen auf 100°C wurden weitere 54,0 g der Monomermischung (13,3 Gew.% Maleinsäureanhydrid gelöst in Propylenoxid) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt [Polymerisationsstufe]. Die Reaktion durch Kühlung des Reaktors mit Eiswasser gestoppt.

Das resultierende Gemisch war frei von den eingesetzten Monomeren Propylenoxid und Maleinsäureanhydrid.

Die Selektivität g/e betrug 0,02.
Die Selektivität e/f war 0,36. Dies entspricht einem Anteil von Carbonateinheiten in 24,9% der Wiederholungseinheiten des Polyetherestercarbonatpolyols ($A_{Carbonat}$).
Über den Einbau des Maleinsäureanhydrids resultierten Doppelbindungen in 6,1% der Wiederholungseinheiten des Polyetherestercarbonatpolyols ($A_{Doppelbindung}$).
Die Molmasse $M_n$ betrug 5657 g/mol bei einer Polydispersität von 2,2.
Die OH-Zahl betrug 27,1 $mg_{KOH}$/g.

Beispiel 3 (Terpolymerisation von Propylenoxid, Maleinsäureanhydrid und $CO_2$ unter Einsatz einer deutlich erhöhten Menge Maleinsäureanhydrid)

In einem 300 ml Druckreaktor ausgestattet mit einem Gaseintragsrührer wurde eine Mischung aus Katalysator DMC-1 (16 mg) und PET-1 (20 g) vorgelegt und 30 min bei 130°C in einem partiellen Vakuum (50 mbar) unter Durchleiten von Argon durch die Reaktionsmischung gerührt [erste Aktivierungsstufe]. Nach Aufpressen von 15 bar $CO_2$, wobei ein leichter Temperaturabfall zu beobachten war, und Wiedererreichen einer Temperatur von 130°C wurden 2,0 g einer Monomermischung (26,2 Gew.% Maleinsäureanhydrid [entsprechend 16,6 Mol%] gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 2,0 g einer Monomermischung wurde ein zweites und drittes Mal wiederholt [zweite Aktivierungsstufe]. Nach Abkühlen auf 100°C wurden weitere 54,0 g der Monomermischung (26,2 Gew.% Maleinsäureanhydrid gelöst in Propylenoxid) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt [Polymerisationsstufe]. Die Reaktion durch Kühlung des Reaktors mit Eiswasser gestoppt.

Das resultierende Gemisch war frei von den eingesetzten Monomeren Propylenoxid und Maleinsäureanhydrid.
Die Selektivität g/e betrug 0,02.
Die Selektivität e/f war 0,52. Dies entspricht einem Anteil von Carbonateinheiten in 29,8% der Wiederholungseinheiten des Polyetherestercarbonatpolyols ($A_{Carbonat}$).
Über den Einbau des Maleinsäureanhydrids resultierten Doppelbindungen in 12,8% der Wiederholungseinheiten des Polyetherestercarbonatpolyols ($A_{Doppelbindung}$).
Die Molmasse $M_n$ betrug 4955 g/mol bei einer Polydispersität von 2,1.
Die OH-Zahl betrug 25,6 $mg_{KOH}/g$.

Vergleichsbeispiel 4 (Reaktion von Propylenoxid und $CO_2$ ohne Zugabe von Maleinsäureanhydrid)

In einem 300 ml Druckreaktor ausgestattet mit einem Gaseintragsrührer wurde eine Mischung aus Katalysator DMC-1 (16 mg) und PET-1 (20 g) vorgelegt und 30 min bei 130°C in einem partiellen Vakuum (50 mbar) unter Durchleiten von Argon durch die Reaktionsmischung gerührt [erste Aktivierungsstufe]. Nach Aufpressen von 15 bar $CO_2$, wobei ein leichter Temperaturabfall zu beobachten war, und Wiedererreichen einer Temperatur von 130°C wurden 2,0 g Propylenoxid mit Hilfe einer HPLC-Pumpe (1 ml/min) zudosiert. Die Reaktionsmischung wurde 20 min bei 130°C gerührt (800 rpm). Die Zugabe von 2,0 g Propylenoxid wurde ein zweites und drittes Mal wiederholt [zweite Aktivierungsstufe]. Nach Abkühlen auf 100°C wurden weitere 54,0 g Propylenoxid über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt [Polymerisationsstufe]. Die Reaktion durch Kühlung des Reaktors mit Eiswasser gestoppt.

Das resultierende Gemisch war frei von Propylenoxid.
Die Selektivität g/e betrug 0,09.
Die Selektivität e/f war 0,26. Dies entspricht einem Anteil von Carbonateinheiten in 20,7% der Wiederholungseinheiten des Polyetherestercarbonatpolyols ($A_{Carbonat}$).
Die Molmasse $M_n$ betrug 5495 g/mol bei einer Polydispersität von 1,4.
Die OH-Zahl betrug 26,2 $mg_{KOH}/g$.

Tabelle 1: Übersicht der Resultate der (Vergleichs-)Beispiele 1 bis 4

| Beispiel | Konzentration MA in der Monomermischung [Gew.%] | Erste Aktivierungsstufe (Schritt $\alpha$) | Zweite Aktivierungsstufe (Schritt $\beta$) | Polymerisations stufe (Schritt $\gamma$) | g/e | e/f |
|---|---|---|---|---|---|---|
| 1 | 6,5 | ohne MA | mit MA | mit MA | 0,05 | 0,32 |
| 2 | 13,3 | ohne MA | mit MA | mit MA | 0,02 | 0,36 |
| 3 | 26,2 | ohne MA | mit MA | mit MA | 0,02 | 0,52 |
| 4 (Vgl.) | - | ohne MA | ohne MA | ohne MA | 0,09 | 0,26 |
| Vgl.: Vergleichsbeispiel | | | | | | |

Beispiele 1-3 und Vergleichsbeispiel 4 belegen, dass im Falle einer Zugabe von cyclischen Anhydriden in der zweiten Aktivierungsstufe und der Polymerisationsstufe der Anteil an cyclischen Carbonat im resultierenden Produktgemisch zurückgedrängt wird und gleichzeitig der Anteil an ins Polymer eingebautem Kohlendioxid erhöht wird (Beispiele 1 bis 3), im Vergleich zur entsprechenden Copolymerisation von Alkylenoxid und Kohlendioxid in Abwesenheit eines cyclischen Carbonats (Vergleichsbeispiel 4). Eine größere Menge an Anhydrid führt zu einem verstärkten Einbau von Kohlendioxid in das erhaltene Polyetherestercarbonatpolyol.

Vergleichsbeispiel 5 (Reaktion von Propylenoxid und $CO_2$ unter Zugabe von Maleinsäureanhydrid nur während der ersten Aktivierungsstufe)

In einem 300 ml Druckreaktor ausgestattet mit einem Gaseintragsrührer wurde eine Mischung aus Katalysator DMC-1 (16 mg), PET-1 (20 g) und Maleinsäureanhydrid (1,6 g) vorgelegt und 30 min bei 130°C in einem partiellen Vakuum (50 mbar) unter Durchleiten von Argon durch die Reaktionsmischung gerührt [erste Aktivierungsstufe]. Nach Aufpressen von 15 bar $CO_2$, wobei ein leichter Temperaturabfall zu beobachten war, und Wiedererreichen einer Temperatur von 130°C wurden 2,0 g Propylenoxid mit Hilfe einer HPLC-Pumpe (1 ml/min) zudosiert. Die Reaktionsmischung wurde 20 min bei 130°C gerührt (800 rpm). Die Zugabe von 2,0 g Propylenoxid wurde ein zweites und drittes Mal wiederholt [zweite Aktivierungsstufe]. Nach Abkühlen auf 100°C wurden weitere 52,4 g Propylenoxid über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt [Polymerisationsstufe]. Die Reaktion durch Kühlung des Reaktors mit Eiswasser gestoppt.

Das resultierende Gemisch enthielt 29 Gew.-% nicht abreagiertes Propylenoxid.
Das resultierende Gemisch war frei von Maleinsäureanhydrid.
Die Selektivität g/e betrug 0,30.
Die Selektivität e/f war 0,21. Dies entspricht einem Anteil von Carbonateinheiten in 17,3% der Wiederholungseinheiten des Polyetherestercarbonatpolyols ($A_{Carbonat}$).
Über den Einbau des Maleinsäureanhydrids resultierten Doppelbindungen in 1,29% der Wiederholungseinheiten des Polyetherestercarbonatpolyols ($A_{Doppelbindung}$).
Die Molmasse $M_n$ betrug 3092 g/mol bei einer Polydispersität von 2,9.
Die OH-Zahl betrug 44,5 $mg_{KOH}$/g.

Vergleichsbeispiel 6 (Reaktion von Propylenoxid und $CO_2$ unter Zugabe von Maleinsäureanhydrid nur während der zweiten Aktivierungsstufe)

In einem 300 ml Druckreaktor ausgestattet mit einem Gaseintragsrührer wurde eine Mischung aus Katalysator DMC-1 (16 mg) und PET-1 (20 g) vorgelegt und 30 min bei 130°C in einem partiellen Vakuum (50 mbar) unter Durchleiten von Argon durch die Reaktionsmischung gerührt [erste Aktivierungsstufe]. Nach Aufpressen von 15 bar $CO_2$, wobei ein leichter Temperaturabfall zu beobachten war, und Wiedererreichen einer Temperatur von 130°C wurden 2,0 g einer Monomermischung (26,2 Gew.% Maleinsäureanhydrid [entsprechend 16,6 Mol%] gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 2,0 g einer Monomermischung wurde ein zweites und drittes Mal wiederholt [zweite Aktivierungsstufe]. Nach Abkühlen auf 100°C wurden weitere 54,0 g Propylenoxid über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt [Polymerisationsstufe]. Die Reaktion durch Kühlung des Reaktors mit Eiswasser gestoppt.

Das resultierende Gemisch war frei von den eingesetzten Monomeren Propylenoxid und Maleinsäureanhydrid.
Die Selektivität g/e betrug 0,06.
Die Selektivität e/f war 0,28. Dies entspricht einem Anteil von Carbonateinheiten in 22,1% der Wiederholungseinheiten des Polyetherestercarbonatpolyols ($A_{Carbonat}$).
Über den Einbau des Maleinsäureanhydrids resultierten Doppelbindungen in 1,63% der Wiederholungseinheiten des Polyetherestercarbonatpolyols ($A_{Doppelbindung}$).
Die Molmasse $M_n$ betrug 4646 g/mol bei einer Polydispersität von 1,4.
Die OH-Zahl betrug 26,1 $mg_{KOH}$/g.

Beispiel 7 (Reaktion von Propylenoxid und $CO_2$ unter Zugabe von Maleinsäureanhydrid nur während der Polymerisationsstufe)

In einem 300 ml Druckreaktor ausgestattet mit einem Gaseintragsrührer wurde eine Mischung aus Katalysator DMC-1 (16 mg) und PET-1 (20 g) vorgelegt und 30 min bei 130°C in einem partiellen Vakuum (50 mbar) unter Durchleiten von Argon durch die Reaktionsmischung gerührt [erste Aktivierungsstufe]. Nach Aufpressen von 15 bar $CO_2$, wobei ein leichter Temperaturabfall zu beobachten war, und Wiedererreichen einer Temperatur von 130°C wurden 2,0 g Propylenoxid mit Hilfe einer HPLC-Pumpe (1 ml/min) zudosiert. Die Reaktionsmischung wurde 20 min bei 130°C gerührt (800

rpm). Die Zugabe von 2,0 g Propylenoxid wurde ein zweites und drittes Mal wiederholt [zweite Aktivierungsstufe]. Nach Abkühlen auf 100°C wurden weitere 54,0 g der Monomermischung (26,2 Gew.% Maleinsäureanhydrid gelöst in Propylenoxid) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt [Polymerisationsstufe]. Die Reaktion durch Kühlung des Reaktors mit Eiswasser gestoppt.

Das resultierende Gemisch war frei von den eingesetzten Monomeren Propylenoxid und Maleinsäureanhydrid.
Die Selektivität g/e betrug 0,03.
Die Selektivität e/f war 0,42. Dies entspricht einem Anteil von Carbonateinheiten in 29,5% der Wiederholungseinheiten des Polyetherestercarbonatpolyols ($A_{Carbonat}$).
Über den Einbau des Maleinsäureanhydrids resultierten Doppelbindungen in 10,74% der Wiederholungseinheiten des Polyetherestercarbonatpolyols ($A_{Doppelbindung}$).
Die Molmasse $M_n$ betrug 5317 g/mol bei einer Polydispersität von 1,8.
Die OH-Zahl betrug 26,4 $mg_{KOH}$/g.

Tabelle 2: Übersicht der Resultate der (Vergleichs-)Beispiele 3 bis 7

| Beispiel | Erste Aktivierungsstufe (Schritt $\alpha$) | Zweite Aktivierungsstufe (Schritt $\beta$) | Polymerisationsstufe (Schritt $\gamma$) | g/e | e/f |
|---|---|---|---|---|---|
| 5 (Vgl) | mit MA | ohne MA | ohne MA | 0,30 | 0,21 |
| 6 (Vgl) | ohne MA | mit MA | ohne MA | 0,06 | 0,28 |
| 7 | ohne MA | ohne MA | mit MA | 0,03 | 0,42 |
| 3 | ohne MA | mit MA | mit MA | 0,02 | 0,52 |
| 4 (Vgl.) | ohne MA | ohneMA | ohne MA | 0,09 | 0,26 |
| Vgl.: Vergleichsbeispiel | | | | | |

Beispiele 3 und 7 und Vergleichsbeispiele 4 bis 6 belegen, dass im Falle einer Zugabe von cyclischen Anhydriden in der Polymerisationsstufe (Beispiele 3 und 7) der Anteil an cyclischen Carbonat im resultierenden Produktgemisch zurückgedrängt wird und gleichzeitig der Anteil an ins Polymer eingebautem Kohlendioxid erhöht wird, im Vergleich zur entsprechenden Copolymerisation von Alkylenoxid und Kohlendioxid in Abwesenheit eines cyclischen Carbonats (Vergleichsbeispiel 4) oder im Vergleich zu einer Zugabe von cyclischen Anhydriden nur in der ersten oder zweiten Aktivierungsstufe (Vergleichsbeispiele 5 und 6).

<u>Beispiel 8</u> (Terpolymerisation von Propylenoxid, Maleinsäureanhydrid und $CO_2$ mit DMC-2 Katalysator)

In einem 300 ml Druckreaktor ausgestattet mit einem Gaseintragsrührer wurde eine Mischung aus Katalysator DMC-2 (16 mg) und PET-1 (40,0 g) vorgelegt und 30 min bei 130°C in einem partiellen Vakuum (50 mbar) unter Durchleiten von Argon durch die Reaktionsmischung gerührt [erste Aktivierungsstufe]. Nach Aufpressen von 15 bar $CO_2$, wobei ein leichter Temperaturabfall zu beobachten war, und Wiedererreichen einer Temperatur von 130°C wurden 4,0 g einer Monomermischung (30,0 Gew.% Maleinsäureanhydrid [entsprechend 20,0 Mol%] gelöst in Propylenoxid) mit Hilfe einer HPLC-Pumpe (1 ml/min) zudosiert. Die Reaktionsmischung wurde 20 min bei 130°C gerührt (1200 rpm). Die Zugabe von 4,0 g einer Monomermischung wurde ein zweites und drittes Mal wiederholt [zweite Aktivierungsstufe]. Nach Abkühlen auf 100°C wurden weitere 28,0 g der Monomermischung (30,0 Gew.% Maleinsäureanhydrid gelöst in Propylenoxid) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt [Polymerisationsstufe]. Die Reaktion durch Kühlung des Reaktors mit Eiswasser gestoppt.

Das resultierende Gemisch enthielt 2,51 Gew.-% nicht abreagiertes Propylenoxid ($R_{PO}$).

Das resultierende Gemisch war frei von Maleinsäureanhydrid.
Die Selektivität g/e betrug 0,05.
Die Selektivität e/f war 0,32. Dies entspricht einem Anteil von Carbonateinheiten in 20,7% der Wiederholungseinheiten des Polyetherestercarbonatpolyols ($A_{Carbonat}$).
Über den Einbau des Maleinsäureanhydrids resultierten Doppelbindungen in 11,7% der Wiederholungseinheiten des Polyetherestercarbonatpolyols ($A_{Doppelbindung}$).
Die Molmasse $M_n$ betrug 3023 g/mol bei einer Polydispersität von 1,20.
Die OH-Zahl betrug 53,2 $mg_{KOH}$/g.

Vergleichsbeispiel 9 (Reaktion von Propylenoxid und $CO_2$ ohne Zugabe von Maleinsäureanhydrid mit DMC-2 Katalysator)

In einem 300 ml Druckreaktor ausgestattet mit einem Gaseintragsrührer wurde eine Mischung aus Katalysator DMC-2 (16 mg) und PET-1 (40,0 g) vorgelegt und 30 min bei 130°C in einem partiellen Vakuum (50 mbar) unter Durchleiten von Argon durch die Reaktionsmischung gerührt [erste Aktivierungsstufe]. Nach Aufpressen von 15 bar $CO_2$, wobei ein leichter Temperaturabfall zu beobachten war, und Wiedererreichen einer Temperatur von 130°C wurden 4,0 g Propylenoxid mit Hilfe einer HPLC-Pumpe (1 ml/min) zudosiert. Die Reaktionsmischung wurde 20 min bei 130°C gerührt (1200 rpm). Die Zugabe von 4,0 g Propylenoxid wurde ein zweites und drittes Mal wiederholt [zweite Aktivierungsstufe]. Nach Abkühlen auf 100°C wurden weitere 28,0 g Propylenoxid über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt [Polymerisationsstufe]. Die Reaktion durch Kühlung des Reaktors mit Eiswasser gestoppt.

Das resultierende Gemisch enthielt 4,04 Gew.-% nicht abreagiertes Propylenoxid ($R_{PO}$).
Das resultierende Gemisch war frei von Maleinsäureanhydrid.
Die Selektivität g/e betrug 0,30.
Die Selektivität e/f war 0,22. Dies entspricht einem Anteil von Carbonateinheiten in 16,4% der Wiederholungseinheiten des Polyetherestercarbonatpolyols ($A_{Carbonat}$).
Die Molmasse $M_n$ betrug 2253 g/mol bei einer Polydispersität von 1,09.
Die OH-Zahl betrug 62,8 $mg_{KOH}$/g.

Tabelle 1: Übersicht der Resultate der (Vergleichs-)Beispiele 8 bis 9

| Beispiel | Konzentration MA in der Monomermischung [Gew.%] | Erste Aktivierungsstufe (Schritt $\alpha$) | Zweite Aktivierungsstufe (Schritt $\beta$) | Polymerisations stufe (Schritt $\gamma$) | g/e | e/f |
|---|---|---|---|---|---|---|
| 8 | 30,0 | ohne MA | mit MA | mit MA | 0,05 | 0,32 |
| 9 (Vgl.) | - | ohne MA | ohne MA | ohne MA | 0,30 | 0,22 |
| Vgl.: Vergleichsbeispiel | | | | | | |

Beispiel 8 und Vergleichsbeispiel 9 belegen, dass im Falle einer Zugabe von cyclischen Anhydriden in der zweiten Aktivierungsstufe und der Polymerisationsstufe der Anteil an cyclischen Carbonat im resultierenden Produktgemisch zurückgedrängt wird und gleichzeitig der Anteil an ins Polymer eingebautem Kohlendioxid erhöht wird (Beispiel 8), im Vergleich zur entsprechenden Copolymerisation von Alkylenoxid und Kohlendioxid in Abwesenheit eines cyclischen Carbonats (Vergleichsbeispiel 9).

Beispiel 10 (Terpolymerisation von Propylenoxid, Maleinsäureanhydrid und $CO_2$ mit DMC-$TiO_2$-Katalysator)

In einem 300 ml Druckreaktor ausgestattet mit einem Gaseintragsrührer wurde eine Mischung aus DMC-$TiO_2$-Katalysator (104 mg) und PET-1 (40,0 g) vorgelegt und 30 min bei 130°C in einem partiellen Vakuum (50 mbar) unter Durchleiten von Argon durch die Reaktionsmischung gerührt [erste Aktivierungsstufe]. Nach Aufpressen von 15 bar $CO_2$, wobei ein leichter Temperaturabfall zu beobachten war, und Wiedererreichen einer Temperatur von 130°C wurden 4,0 g einer Monomermischung (30,0 Gew.% Maleinsäureanhydrid [entsprechend 20,0 Mol%] gelöst in Propylenoxid) mit Hilfe einer HPLC-Pumpe (1 ml/min) zudosiert. Die Reaktionsmischung wurde 20 min bei 130°C gerührt (1200 rpm). Die Zugabe von 4,0 g einer Monomermischung wurde ein zweites und drittes Mal wiederholt [zweite Aktivierungsstufe]. Nach Abkühlen auf 100°C wurden weitere 28,0 g der Monomermischung (30,0 Gew.% Maleinsäureanhydrid gelöst in Propylenoxid) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt [Polymerisationsstufe]. Die Reaktion durch Kühlung des Reaktors mit Eiswasser gestoppt.

Das resultierende Gemisch enthielt 0,8 Gew.-% nicht abreagiertes Propylenoxid ($R_{PO}$).
Das resultierende Gemisch war frei von Maleinsäureanhydrid.
Die Selektivität g/e betrug 0,02.
Die Selektivität e/f war 0,25. Dies entspricht einem Anteil von Carbonateinheiten in 18,5% der Wiederholungseinheiten des Polyetherestercarbonatpolyols ($A_{Carbonat}$).
Über den Einbau des Maleinsäureanhydrids resultierten Doppelbindungen in 10,2% der Wiederholungseinheiten des Polyetherestercarbonatpolyols ($A_{Doppelbindung}$).
Die Molmasse $M_n$ betrug 2643 g/mol bei einer Polydispersität von 2,2.

Die OH-Zahl betrug 54,5 $mg_{KOH}/g$.

Vergleichsbeispiel 11 (Reaktion von Propylenoxid und $CO_2$ ohne Zugabe von Maleinsäureanhydrid mit DMC-$TiO_2$-Katalysator)

In einem 300 ml Druckreaktor ausgestattet mit einem Gaseintragsrührer wurde eine Mischung aus DMC-$TiO_2$-Katalysator (104 mg) und PET-1 (40,0 g) vorgelegt und 30 min bei 130°C in einem partiellen Vakuum (50 mbar) unter Durchleiten von Argon durch die Reaktionsmischung gerührt [erste Aktivierungsstufe]. Nach Aufpressen von 15 bar $CO_2$, wobei ein leichter Temperaturabfall zu beobachten war, und Wiedererreichen einer Temperatur von 130°C wurden 4,0 g Propylenoxid mit Hilfe einer HPLC-Pumpe (1 ml/min) zudosiert. Die Reaktionsmischung wurde 20 min bei 130°C gerührt (1200 rpm). Die Zugabe von 4,0 g Propylenoxid wurde ein zweites und drittes Mal wiederholt [zweite Aktivierungsstufe]. Nach Abkühlen auf 100°C wurden weitere 28,0 g Propylenoxid über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt [Polymerisationsstufe]. Die Reaktion durch Kühlung des Reaktors mit Eiswasser gestoppt.

Das resultierende Gemisch enthielt 0,8 Gew.-% nicht abreagiertes Propylenoxid ($R_{PO}$).
Das resultierende Gemisch war frei von Maleinsäureanhydrid.
Die Selektivität g/e betrug 0,27.
Die Selektivität e/f war 0,13. Dies entspricht einem Anteil von Carbonateinheiten in 11,4% der Wiederholungseinheiten des Polyetherestercarbonatpolyols ($A_{Carbonat}$).
Die Molmasse $M_n$ betrug 2466 g/mol bei einer Polydispersität von 1,3.
Die OH-Zahl betrug 62,3 $mg_{KOH}/g$.

Tabelle 1: Übersicht der Resultate der (Vergleichs-)Beispiele 8 bis 9

| Beispiel | Konzentration MA in der Monomermischung [Gew.%] | Erste Aktivierungsstufe (Schritt $\alpha$) | Zweite Aktivierungsstufe (Schritt $\beta$) | Polymerisations stufe (Schritt $\gamma$) | g/e | e/f |
|---|---|---|---|---|---|---|
| 10 | 30,0 | ohne MA | mit MA | mit MA | 0,02 | 0,25 |
| 11 (Vgl.) | - | ohne MA | ohne MA | ohne MA | 0,27 | 0,13 |
| Vgl.: Vergleichsbeispiel | | | | | | |

Beispiel 10 und Vergleichsbeispiel 11 belegen, dass im Falle einer Zugabe von cyclischen Anhydriden in der zweiten Aktivierungsstufe und der Polymerisationsstufe der Anteil an cyclischen Carbonat im resultierenden Produktgemisch zurückgedrängt wird und gleichzeitig der Anteil an ins Polymer eingebautem Kohlendioxid erhöht wird (Beispiel 10), im Vergleich zur entsprechenden Copolymerisation von Alkylenoxid und Kohlendioxid in Abwesenheit eines cyclischen Carbonats (Vergleichsbeispiel 11). Eine größere Menge an Anhydrid führt zu einem verstärkten Einbau von Kohlendioxid in das erhaltene Polyetherestercarbonatpolyol.

Beispiel 12 (Terpolymerisation von Propylenoxid, Maleinsäureanhydrid und $CO_2$ mit DMC-$SiO_2$-Katalysator)

In einem 300 ml Druckreaktor ausgestattet mit einem Gaseintragsrührer wurde eine Mischung aus DMC-$SiO_2$-Katalysator (93 mg) und PET-1 (40,0 g) vorgelegt und 30 min bei 130°C in einem partiellen Vakuum (50 mbar) unter Durchleiten von Argon durch die Reaktionsmischung gerührt [erste Aktivierungsstufe]. Nach Aufpressen von 15 bar $CO_2$, wobei ein leichter Temperaturabfall zu beobachten war, und Wiedererreichen einer Temperatur von 130°C wurden 4,0 g einer Monomermischung (30,0 Gew.% Maleinsäureanhydrid [entsprechend 20,0 Mol%] gelöst in Propylenoxid) mit Hilfe einer HPLC-Pumpe (1 ml/min) zudosiert. Die Reaktionsmischung wurde 20 min bei 130°C gerührt (1200 rpm). Die Zugabe von 4,0 g einer Monomermischung wurde ein zweites und drittes Mal wiederholt [zweite Aktivierungsstufe]. Nach Abkühlen auf 100°C wurden weitere 28,0 g der Monomermischung (30,0 Gew.% Maleinsäureanhydrid gelöst in Propylenoxid) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt [Polymerisationsstufe]. Die Reaktion durch Kühlung des Reaktors mit Eiswasser gestoppt.

Das resultierende Gemisch war frei von den eingesetzten Monomeren Propylenoxid und Maleinsäureanhydrid.

Die Selektivität g/e betrug 0,03.
Die Selektivität e/f war 0,17. Dies entspricht einem Anteil von Carbonateinheiten in 11,5% der Wiederholungseinheiten des Polyetherestercarbonatpolyols ($A_{Carbonat}$).

Über den Einbau des Maleinsäureanhydrids resultierten Doppelbindungen in 10,2% der Wiederholungseinheiten des Polyetherestercarbonatpolyols ($A_{Doppelbindung}$).
Die Molmasse $M_n$ betrug 2484 g/mol bei einer Polydispersität von 1,20.
Die OH-Zahl betrug 54,2 $mg_{KOH}$/g.

Vergleichsbeispiel 13 (Reaktion von Propylenoxid und $CO_2$ ohne Zugabe von Maleinsäureanhydrid mit DMC-$SiO_2$-Katalysator)

In einem 300 ml Druckreaktor ausgestattet mit einem Gaseintragsrührer wurde eine Mischung aus DMC-$SiO_2$-Katalysator (93 mg) und PET-1 (40,0 g) vorgelegt und 30 min bei 130°C in einem partiellen Vakuum (50 mbar) unter Durchleiten von Argon durch die Reaktionsmischung gerührt [erste Aktivierungsstufe]. Nach Aufpressen von 15 bar $CO_2$, wobei ein leichter Temperaturabfall zu beobachten war, und Wiedererreichen einer Temperatur von 130°C wurden 4,0 g Propylenoxid mit Hilfe einer HPLC-Pumpe (1 ml/min) zudosiert. Die Reaktionsmischung wurde 20 min bei 130°C gerührt (1200 rpm). Die Zugabe von 4,0 g Propylenoxid wurde ein zweites und drittes Mal wiederholt [zweite Aktivierungsstufe]. Nach Abkühlen auf 100°C wurden weitere 28,0 g Propylenoxid über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt [Polymerisationsstufe]. Die Reaktion durch Kühlung des Reaktors mit Eiswasser gestoppt.

Das resultierende Gemisch enthielt 0,8 Gew.-% nicht abreagiertes Propylenoxid ($R_{PO}$).
Das resultierende Gemisch war frei von Maleinsäureanhydrid.
Die Selektivität g/e betrug 0,42.
Die Selektivität e/f war 0,13. Dies entspricht einem Anteil von Carbonateinheiten in 11,3% der Wiederholungseinheiten des Polyetherestercarbonatpolyols ($A_{Carbonat}$).
Die Molmasse $M_n$ betrug 2261 g/mol bei einer Polydispersität von 1,4.
Die OH-Zahl betrug 64,6 $mg_{KOH}$/g.

Tabelle 1: Übersicht der Resultate der (Vergleichs-)Beispiele 10 bis 11

| Beispiel | Konzentration MA in der Monomermischung [Gew.%] | Erste Aktivierungsstufe (Schritt $\alpha$) | Zweite Aktivierungsstufe (Schritt $\beta$) | Polymerisations stufe (Schritt $\gamma$) | g/e | e/f |
|---|---|---|---|---|---|---|
| 12 | 30,0 | ohne MA | mit MA | mit MA | 0,03 | 0,17 |
| 13 (Vgl.) | - | ohne MA | ohne MA | ohne MA | 0,42 | 0,13 |
| Vgl.: Vergleichsbeispiel | | | | | | |

Beispiel 12 und Vergleichsbeispiel 13 belegen, dass im Falle einer Zugabe von cyclischen Anhydriden in der zweiten Aktivierungsstufe und der Polymerisationsstufe der Anteil an cyclischen Carbonat im resultierenden Produktgemisch zurückgedrängt wird und gleichzeitig der Anteil an ins Polymer eingebautem Kohlendioxid erhöht wird (Beispiel 12), im Vergleich zur entsprechenden Copolymerisation von Alkylenoxid und Kohlendioxid in Abwesenheit eines cyclischen Carbonats (Vergleichsbeispiel 13). Eine größere Menge an Anhydrid führt zu einem verstärkten Einbau von Kohlendioxid in das erhaltene Polyetherestercarbonatpolyol.

Beispiel 14 (Reaktion von Styroloxid und $CO_2$ unter Zugabe von Phthalsäureanhydrid während der zweiten Aktivierungsstufe und der Polymerisationsstufe)

In einem 300 ml Druckreaktor ausgestattet mit einem Impellerrührer wurde eine Mischung aus Katalysator DMC-1 (8 mg) und PET-1 (3 g) vorgelegt und 30 min bei 130°C unter leichtem Vakuum (500 mbar) und leichtem $CO_2$-Strom gerührt (500 rpm) [erste Aktivierungsstufe]. Nach Aufpressen von 15 bar $CO_2$, wobei ein leichter Temperaturabfall zu beobachten war, und Wiedererreichen einer Temperatur von 130°C wurden 7,5 g einer Monomermischung (10 Gew.% Phthalsäureanhydrid [entsprechend 7,4 Mol%] gelöst in Styroloxid) mit Hilfe einer HPLC-Pumpe (1 ml/min) zudosiert. Die Reaktionsmischung wurde 30 min bei 130°C gerührt (500 rpm) [zweite Aktivierungsstufe]. Nach Abkühlen auf 100°C wurden weitere 32,5 g der Monomermischung (10 Gew.% Phthalsäureanhydrid gelöst in Styroloxid) über eine HPLC-Pumpe (1 ml/min) zudosiert, wobei der $CO_2$ Druck konstant auf 15 bar gehalten wurde. Anschließend wurde die Reaktionsmischung weitere 3 h bei 100°C gerührt [Polymerisationsstufe]. Die Reaktion durch Kühlung des Reaktors mit Eiswasser gestoppt.

Das resultierende Gemisch enthielt 6% nicht abreagiertes Styroloxid ($R_{SO}$).

Die Selektivität g'/e' betrug 0,08.
Die Selektivität e'/f' war 0,25. Dies entspricht einem Anteil von Carbonateinheiten in 20,0% der Wiederholungseinheiten des Polyetherestercarbonatpolyols ($A_{Carbonat}$').

Vergleichsbeispiel 15 (Reaktion von Styroloxid und $CO_2$ ohne Zugabe von Phthalsäureanhydrid) In einem 300 ml Druckreaktor ausgestattet mit einem Impellerrührer wurde eine Mischung aus Katalysator DMC-1 (8 mg) und PET-1 (3 g) vorgelegt und 30 min bei 130°C unter leichtem Vakuum (500 mbar) und leichtem $CO_2$-Strom gerührt (500 rpm) [erste Aktivierungsstufe]. Nach Aufpressen von 15 bar $CO_2$, wobei ein leichter Temperaturabfall zu beobachten war, und Wiedererreichen einer Temperatur von 130°C wurden 7,5 g einer Styroloxid mit Hilfe einer HPLC-Pumpe (1 ml/min) zudosiert. Die Reaktionsmischung wurde 30 min bei 130°C gerührt (500 rpm) [zweite Aktivierungsstufe]. Nach Abkühlen auf 100°C wurden weitere 32,5 g Styroloxid über eine HPLC-Pumpe (1 ml/min) zudosiert, wobei der $CO_2$ Druck konstant auf 15 bar gehalten wurde. Anschließend wurde die Reaktionsmischung weitere 3 h bei 100°C gerührt [Polymerisationsstufe]. Die Reaktion durch Kühlung des Reaktors mit Eiswasser gestoppt.

Das resultierende Gemisch enthielt 11% nicht abreagiertes Styroloxid ($R_{SO}$).
Die Selektivität g'/e' betrug 0,18.
Die Selektivität e'/f' war 0,12. Dies entspricht einem Anteil von Carbonateinheiten in 11,0% der Wiederholungseinheiten des Polyetherestercarbonatpolyols ($A_{Carbonat}$').

Tabelle 3: Übersicht der Resultate der (Vergleichs-)Beispiele 12 und 13

| Beispiel | Erste Aktivierungsstufe (Schritt $\alpha$) | Zweite Aktivierungsstufe (Schritt $\beta$) | Polymerisationsstufe (Schritt $\gamma$) | $R_{SO}$ (mol%) | g'/e' | e'/f' |
|---|---|---|---|---|---|---|
| 14 | ohne PA | mit PA | mit PA | 6 | 0,08 | 0,25 |
| 15 (Vgl.) | ohne PA | ohne PA | ohne PA | 11 | 0,18 | 0,12 |
| Vgl.: Vergleichsbeispiel | | | | | | |

Ein Vergleich des Beispiels 14 mit dem Vergleichsbeispiel 15 zeigt, dass ein Zusatz von Phthalsäureanhydrid während der zweiten Aktivierungsstufe und der Polymerisationsstufe auch bei der Umsetzung von Styroloxid und $CO_2$ eine deutliche Steigerung des Verhältnisses von cyclischem Carbonat zu linearem Carbonat (geringeres Verhältnis g'/e') bewirkt. Ebenso ist auch der $CO_2$-Einbau in das Polymer verbessert (erhöhtes Verhältnis e'/f). Weiterhin ist die Menge des nicht umgesetzten Styroloxids verringert (geringeres $R_{SO}$).

**Patentansprüche**

1. Verfahren zur Herstellung von Polyetherestercarbonatpolyolen durch katalytische Anlagerung von Kohlendioxid, Alkylenoxiden und cyclischen Anhydriden an eine oder mehreren H-funktionellen Startersubstanzen in Gegenwart von Doppelmetallcyanid (DMC)-Katalysator, wobei in einem ersten Schritt der DMC-Katalysator und mindestens eine H-funktionelle Startersubstanz vorgelegt werden und in einem zweiten Schritt durch Zugabe von Alkylenoxid, $CO_2$ und gegebenenfalls cyclische Anhydride der DMC-Katalysator aktiviert wird, und in einem dritten Schritt [Polymerisationsstufe] die Monomeren Alkylenoxid, cyclisches Anhydrid und $CO_2$ zugegeben werden.

2. Verfahren zur Herstellung von Polyetherestercarbonatpolyolen durch katalytische Anlagerung von Kohlendioxid, Alkylenoxiden und cyclischen Anhydriden an eine oder mehreren H-funktionellen Startersubstanzen in Gegenwart von Doppelmetallcyanid (DMC)-Katalysator, wobei

($\alpha$) die H-funktionelle Startersubstanz oder ein Gemisch aus mindestens zwei H-funktionellen Startersubstanzen vorgelegt werden [erste Aktivierungsstufe], wobei der DMC-Katalysator der H-funktionellen Startersubstanz oder dem Gemisch von mindestens zwei H-funktionellen Startersubstanzen vor oder nach der ersten Aktivierungsstufe zugesetzt werden,
($\beta$) eine Teilmenge (bezogen auf die Gesamtmenge der in den Schritten ($\beta$) und ($\gamma$) eingesetzten Menge an Alkylenoxiden) von einem oder mehreren Alkylenoxiden und gegebenenfalls eine Teilmenge (bezogen auf die Gesamtmenge der in den Schritten ($\beta$) und ($\gamma$) eingesetzten Menge an cyclischen Anhydriden) von einem oder mehreren cyclischen Anhydriden zu der aus Schritt ($\alpha$) resultierenden Mischung zugesetzt wird [zweite Aktivierungsstufe], wobei diese Zugabe einer Teilmenge an Alkylenoxid erfolgen kann, und wobei der Schritt ($\beta$) auch mehrfach erfolgen kann,
($\gamma$) ein oder mehrere Alkylenoxide, ein oder mehrere cyclische Anhydride und Kohlendioxid zu der aus Schritt

(β) resultierenden Mischung fortwährend dosiert werden [Polymerisationsstufe], wobei die für die Terpolymerisation eingesetzten Alkylenoxide bzw. cyclische Anhydride gleich oder verschieden sind von den bei Schritt (β) eingesetzten Alkylenoxiden bzw. cyclischen Anhydriden.

**3.** Verfahren gemäß Anspruch 2, wobei in Schritt (α)

(α1) in einem Reaktor der DMC-Katalysator und eine oder mehrere H-funktionelle Starterverbindungen vorgelegt werden,
(α2) durch den Reaktor bei einer Temperatur von 50 bis 200°C ein Inertgas, ein Inertgas-Kohlendioxid-Gemisch oder Kohlendioxid geleitet wird und gleichzeitig durch Entfernen des Inertgases oder Kohlendioxids ein reduzierter Druck (absolut) von 10 mbar bis 800 mbar, im Reaktor eingestellt wird [erste Aktivierungsstufe].

**4.** Verfahren gemäß Anspruch 3, wobei der Doppelmetallcyanid-Katalysator zu der H-funktionellen Startersubstanz oder dem Gemisch von mindestens zwei H-funktionellen Startersubstanzen in Schritt (α1) oder unmittelbar anschließend in Schritt (a2) zugesetzt wird.

**5.** Verfahren gemäß einem der Ansprüche 1 bis 4, wobei in Schritt (γ) das Kohlendioxid in die Mischung eingeleitet wird durch

(i) Begasung des Reaktionsgemisches im Reaktor von unten,
(ii) Verwendung eines Hohlwellenrührers,
(iii) Kombination aus den Dosierungen gemäß (i) und (ii), und/oder
(iv) Begasung über die Flüssigkeitsoberfläche durch Einsatz mehrstufig ausgeführter Rührorgane.

**6.** Verfahren gemäß einem der Ansprüche 1 bis 5, wobei in den Schritten (β) und/oder (γ) das Kohlendioxid in die Mischung eingeleitet wird durch Begasung des Reaktionsgemisches im Reaktor von unten über ein Einleitrohr, über einen Begasungsring oder über eine Kombination aus Einleitrohr oder Begasungsring mit einem Gas-Zerteilungsrührer.

**7.** Verfahren gemäß einem der Ansprüche 1 bis 6, wobei die Polymerisationsstufe (γ) in einem Rührkessel, Rohrreaktor oder Schlaufenreaktor durchgeführt wird.

**8.** Verfahren gemäß einem der Ansprüche 1 bis 7, wobei als cyclisches Anhydrid mindestens eine Verbindung der Formel (II), (III) oder (IV) eingesetzt wird,

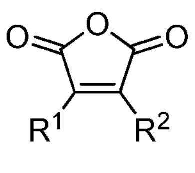
(II)

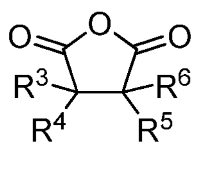
(III)

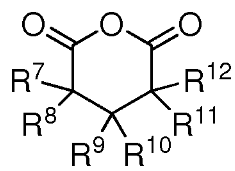
(IV)

wobei

R1 und R2 für Wasserstoff, Halogen, C1-C22-Alkyl, C1-C22-Alkenyl oder C6-C18-Aryl stehen oder R1 und R2 Glieder eines 4 bis 7 gliedrigen Rings oder polycyclischen Systems sind,
R3, R4, R5 und R6 für Wasserstoff, C1-C22-Alkyl, C1-C22-Alkenyl oder C6-C18-Aryl stehen oder Glieder eines 4 bis 7 gliedrigen Rings oder polycyclischen Systems sind und
R7, R8, R9, R10, R11 und R12 für Wasserstoff, C1-C22-Alkyl, C1-C22-Alkenyl oder C6-C18-Aryl stehen oder Glieder eines 4 bis 7 gliedrigen Rings oder polycyclischen Systems sind.

**9.** Verfahren gemäß einem der Ansprüche 1 bis 7, wobei als cyclisches Anhydrid mindestens eine Verbindung ausgewählt aus der Gruppe bestehend aus Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsärueanhyderid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, und Allylnorbornendisäureanhydrid eingesetzt werden.

**10.** Verfahren gemäß einem der Ansprüche 1 bis 9, wobei die eingesetzten H-funktionellen Startersubstanzen ausgewählt sind aus mindestens einer der Gruppe bestehend aus Alkohole, Amine, Thiole, Aminoalkohole, Thioalkohole, Hydroxyester, Polyetherpolyole, Polyesterpolyole, Polyesteretherpolyole, Polycarbonatpolyole, Polyethercarbonatpolyole, Polyethylenimine, Polyetheramine Polytetrahydrofurane, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren und $C_1$-$C_{24}$ Alkyl-Fettsäureester, die im Mittel mindestens 2 OH-Gruppen pro Molekül enthalten.

**11.** Verfahren gemäß einem der Ansprüche 1 bis 10, wobei die eingesetzten H-funktionellen Startersubstanzen ausgewählt sind aus mindestens einer der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist und die Polyetherpolyole ein Molekulargewicht $M^n$ im Bereich von 62 bis 4500 g/mol und eine Funktionalität von 2 bis 3 aufweisen.

**12.** Verfahren gemäß einem der Ansprüche 1 bis 11, wobei der eingesetzte Doppelmetallcyanid-Katalysator mindestens eine Doppelcyanidverbindung ausgewählt aus der Gruppe bestehend aus Zinkhexacyanocobaltat(III), Zinkhexacyanoiridat(III), Zinkhexacyanoferrat(III) und Cobalt(II)hexacyanocobaltat(III) enthält.

**13.** Verfahren gemäß einem der Ansprüche 1 bis 12, **dadurch gekennzeichnet, dass** der Doppelmetallcyanid-Katalysator mindestens einen ungesättigten Alkohol als organischen Komplexliganden enthält.

**14.** Verfahren gemäß einem der Ansprüche 1 bis 12, wobei der eingesetzte Doppelmetallcyanid-Katalysator mindestens einen organischen Komplexliganden ausgewählt aus der Gruppe bestehend aus aliphatischem Ether, Ethanol, Isopropanol, n-Butanol, iso-Butanol, sek.-Butanol, tert-Butanol, 2-Methyl-3-buten-2-ol, 2-Methyl-3-butin-2-ol, Ethylenglykol-mono-tert-butylether, Diethylenglykol-mono-tert-butylether, Tripropylenglykol-mono-methylether und 3-Methyl-3-oxetan-methanol.

**15.** Polyetherestercarbonate erhältlich durch das Verfahren gemäß einem der Ansprüche 1 bis 14.

## Claims

**1.** Process for preparing polyether ester carbonate polyols by catalytic addition of carbon dioxide, alkylene oxides and cyclic anhydrides onto one or more H-functional starter substances in the presence of double metal cyanide (DMC) catalyst, wherein, in a first step, the DMC catalyst and at least one H-functional starter substance are initially charged and, in a second step, the DMC catalyst is activated by addition of alkylene oxide, $CO_2$ and optionally cyclic anhydrides, and, in a third step [polymerization stage], the alkylene oxide, cyclic anhydride and $CO_2$ monomers are added.

**2.** Process for preparing polyether ester carbonate polyols by catalytic addition of carbon dioxide, alkylene oxides and cyclic anhydrides onto one or more H-functional starter substances in the presence of double metal cyanide (DMC) catalyst, wherein

(α) the H-functional starter substance or a mixture of at least two H-functional starter substances is initially charged [first activation stage], with addition of the DMC catalyst to the H-functional starter substance or to the mixture of at least two H-functional starter substances before or after the first activation stage,
(β) a portion (based on the total amount of alkylene oxides used in steps (β) and (γ)) of one or more alkylene oxides and optionally a portion (based on the total amount of cyclic anhydrides used in steps (β) and (γ)) of one or more cyclic anhydrides is added to the mixture resulting from step (α) [second activation stage], where this addition of a portion of alkylene oxide can be effected, and where step (β) can also be effected more than once,
(γ) one or more alkylene oxides, one or more cyclic anhydrides and carbon dioxide are metered constantly into the mixture resulting from step (β) [polymerization stage], where the alkylene oxides and/or cyclic anhydrides used for the terpolymerization are the same as or different than the alkylene oxides and/or cyclic anhydrides used in step (β).

**3.** Process according to Claim 2, wherein, in step (a),

(α1) a reactor is initially charged with the DMC catalyst and one or more H-functional starter compounds,
(a2) an inert gas, an inert gas-carbon dioxide mixture or carbon dioxide is passed through the reactor at a temperature of 50 to 200°C and, at the same time, a reduced pressure (in absolute terms) of 10 mbar to 800 mbar is established in the reactor by removing the inert gas or carbon dioxide [first activation stage].

**4.** Process according to Claim 3, wherein the double metal cyanide catalyst is added to the H-functional starter substance or the mixture of at least two H-functional starter substances in step (α1) or immediately thereafter in step (a2).

**5.** Process according to any of Claims 1 to 4, wherein, in step (γ), the carbon dioxide is introduced into the mixture by

(i) sparging the reaction mixture in the reactor from below,
(ii) using a hollow-shaft stirrer,
(iii) combination of the metering methods as per (i) and (ii), and/or
(iv) sparging via the liquid surface by use of multilevel stirrer units.

**6.** Process according to any of Claims 1 to 5, wherein, in steps (β) and/or (γ), the carbon dioxide is introduced into the mixture by sparging the reaction mixture in the reactor from below using an inlet tube, using a sparging ring or using a combination of inlet tube or sparging ring with a gas-distributing stirrer.

**7.** Process according to any of Claims 1 to 6, wherein the polymerization stage (γ) is conducted in a stirred tank, tubular reactor or loop reactor.

**8.** Process according to any of Claims 1 to 7, wherein the cyclic anhydride used is at least one compound of the formula (II), (III) or (IV)

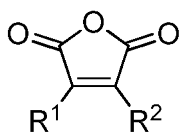
(II)

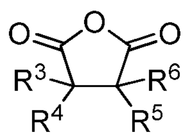
(III)

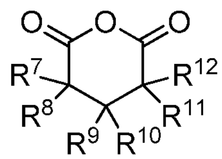
(IV)

where

R1 and R2 are each hydrogen, halogen, C1-C22-alkyl, C1-C22-alkenyl or C6-C18-aryl, or R1 and R2 are members of a 4- to 7-membered ring or polycyclic system,
R3, R4, R5 and R6 are each hydrogen, C1-C22-alkyl, C1-C22-alkenyl or C6-C18-aryl or are members of a 4- to 7-membered ring or polycyclic system and
R7, R8, R9, R10, R11 and R12 are each hydrogen, C1-C22-alkyl, C1-C22-alkenyl or C6-C18-aryl or are members of a 4- to 7-membered ring or polycyclic system.

**9.** Process according to any of Claims 1 to 7, wherein the cyclic anhydride used is at least one compound selected from the group consisting of maleic anhydride, phthalic anhydride, 1,2-cyclohexanedicarboxylic anhydride, diphenic anhydride, tetrahydrophthalic anhydride, methyltetrahydrophthalic anhydride, norbornenedioic anhydride and chlorination products thereof, succinic anhydride, glutaric anhydride, diglycolic anhydride, 1,8-naphthalic anhydride, succinic anhydride, dodecenylsuccinic anhydride, tetradecenylsuccinic anhydride, hexadecenylsuccinic anhydride, octadecenylsuccinic anhydride, 3- and 4-nitrophthalic anhydride, tetrachlorophthalic anhydride, tetrabromophthalic anhydride, itaconic anhydride, dimethylmaleic anhydride and allylnorbornenedioic anhydride.

**10.** Process according to any of Claims 1 to 9, wherein the H-functional starter substances used are selected from at least one of the group consisting of alcohols, amines, thiols, amino alcohols, thio alcohols, hydroxy esters, polyether polyols, polyester polyols, polyester ether polyols, polycarbonate polyols, polyether carbonate polyols, polyethyleneimines, polyetheramines polytetrahydrofurans, polyether thiols, polyacrylate polyols, castor oil, the mono- or diglyceride of castor oil, monoglycerides of fatty acids, chemically modified mono-, di- and/or triglycerides of fatty acids and $C_1$-$C_{24}$-alkyl fatty acid esters containing an average of at least 2 OH groups per molecule.

**11.** Process according to any of Claims 1 to 10, wherein the H-functional starter substances used are selected from at least one of the group consisting of ethylene glycol, propylene glycol, 1,3-propanediol, 1,3-butanediol, 1,4-butanediol, 1,5-pentanediol, 2-methylpropane-1,3-diol, neopentyl glycol, 1,6-hexanediol, 1,8-octanediol, diethylene glycol, dipropylene glycol, glycerol, trimethylolpropane, di- and trifunctional polyether polyols, where the polyether polyol has been formed from a di- or tri-H-functional starter substance and propylene oxide or a di- or tri-H-functional starter substance, propylene oxide and ethylene oxide and the polyether polyols have a molecular weight $M^n$ in the range from 62 to 4500 g/mol and a functionality of 2 to 3.

**12.** Process according to any of Claims 1 to 11, wherein the double metal cyanide catalyst used comprises at least one double cyanide compound selected from the group consisting of zinc hexacyanocobaltate(III), zinc hexacyanoiridate(III), zinc hexacyanoferrate(III) and cobalt(II) hexacyanocobaltate(III).

**13.** Process according to any of Claims 1 to 12, **characterized in that** the double metal cyanide catalyst comprises at least one unsaturated alcohol as an organic complex ligand.

**14.** Process according to any of Claims 1 to 12, wherein the double metal cyanide catalyst used at least one organic complex ligand selected from the group consisting of aliphatic ether, ethanol, isopropanol, n-butanol, isobutanol, sec-butanol, tert-butanol, 2-methyl-3-buten-2-ol, 2-methyl-3-butyn-2-ol, ethylene glycol mono-tert-butyl ether, diethylene glycol mono-tert-butyl ether, tripropylene glycol monomethyl ether and 3-methyl-3-oxetanemethanol.

**15.** Polyether ester carbonates obtainable by the process according to any of Claims 1 to 14.

**Revendications**

**1.** Procédé pour la préparation de polyétherestercarbonate-polyols par addition catalytique de dioxyde de carbone, d'oxydes d'alkylène et d'anhydrides cycliques sur une ou plusieurs substances de départ à fonctionnalité H en présence d'un catalyseur de type cyanure métallique double (DMC), dans lequel, dans une première étape, le catalyseur de type DMC et au moins une substance de départ à fonctionnalité H sont disposés au préalable et, dans une deuxième étape, le catalyseur de type DMC est activé par addition d'oxyde d'alkylène, de $CO_2$ et le cas échéant d'anhydrides cycliques et, dans une troisième étape [étage de polymérisation], les monomères oxyde d'alkylène, anhydride cyclique et $CO_2$ sont ajoutés.

**2.** Procédé pour la préparation de polyétherestercarbonate-polyols par addition catalytique de dioxyde de carbone, d'oxydes d'alkylène et d'anhydrides cycliques sur une ou plusieurs substances de départ à fonctionnalité H en présence d'un catalyseur de type cyanure métallique double (DMC), dans lequel

(α) la substance de départ à fonctionnalité H ou un mélange d'au moins deux substances de départ à fonctionnalité H est disposé(e) au préalable [premier étage d'activation], le catalyseur de type DMC étant ajouté à la substance de départ à fonctionnalité H ou au mélange d'au moins deux substances de départ à fonctionnalité H avant ou après le premier étage d'activation,
(β) une quantité partielle (par rapport à la quantité totale d'oxydes d'alkylène utilisée dans les étapes (β) et (γ)) d'un ou de plusieurs oxydes d'alkylène et le cas échéant une quantité partielle (par rapport à la quantité totale d'anhydrides cycliques utilisée dans les étapes (β) et (γ)) d'un ou de plusieurs anhydrides cycliques sont ajoutées au mélange résultant de l'étape (α) [deuxième étage d'activation], cette addition d'une quantité partielle d'oxyde d'alkylène pouvant avoir lieu et l'étape (β) pouvant également avoir lieu plusieurs fois,
(γ) un ou plusieurs oxydes d'alkylène, un ou plusieurs anhydrides cycliques et du dioxyde de carbone sont dosés en continu dans le mélange résultant de l'étape (β) [étage de polymérisation], les oxydes d'alkylène ou les anhydrides cycliques utilisés pour la terpolymérisation étant identiques aux ou différents des oxydes d'alkylène ou anhydrides cycliques utilisés lors de l'étape (β).

**3.** Procédé selon la revendication 2, dans lequel, dans l'étape (α),

(α1) le catalyseur de type DMC et un ou plusieurs composés de départ à fonctionnalité H sont disposés au préalable dans un réacteur,
(α2) un gaz inerte, un mélange de gaz inerte-dioxyde de carbone ou du dioxyde de carbone est guidé à travers le réacteur, à une température de 50 à 200°C, et une pression réduite (absolue) de 10 mbars à 800 mbars est réglée simultanément dans le réacteur, par élimination du gaz inerte ou du dioxyde de carbone, [premier étage

d'activation].

4. Procédé selon la revendication 3, dans lequel le catalyseur de type cyanure métallique double est ajouté à la substance de départ à fonctionnalité H ou au mélange d'au moins deux substances de départ à fonctionnalité H dans l'étape ($\alpha$1) ou immédiatement après dans l'étape ($\alpha$2).

5. Procédé selon l'une quelconque des revendications 1 à 4, dans lequel, dans l'étape ($\gamma$), le dioxyde de carbone est introduit dans le mélange par

   (i) gazage du mélange réactionnel dans le réacteur à partir du bas,
   (ii) utilisation d'un agitateur à arbre creux,
   (iii) combinaison des dosages selon (i) et (ii) et/ou
   (iv) gazage sur la surface de liquide par utilisation d'organes d'agitation, conçus à plusieurs étages.

6. Procédé selon l'une quelconque des revendications 1 à 5, dans lequel, dans les étapes ($\beta$) et/ou ($\gamma$), le dioxyde de carbone est introduit dans le mélange par gazage du mélange réactionnel dans le réacteur à partir du bas via un tuyau d'introduction, via un anneau de gazage ou via une combinaison d'un tuyau d'introduction ou d'un anneau de gazage avec un agitateur de dispersion de gaz.

7. Procédé selon l'une quelconque des revendications 1 à 6, dans lequel l'étage de polymérisation ($\gamma$) est réalisé dans une cuve agitée, un réacteur tubulaire ou un réacteur à boucle à circulation interne.

8. Procédé selon l'une quelconque des revendications 1 à 7, dans lequel on utilise, comme anhydride cyclique, au moins un composé de formule (II), (III) ou (IV),

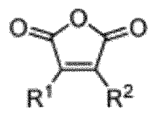
(II)

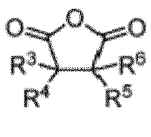
(III)

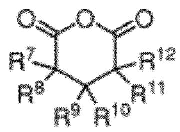
(IV)

dans lesquelles

$R^1$ et $R^2$ représentent hydrogène, halogène, $C_1$-$C_{22}$-alkyle, $C_1$-$C_{22}$-alcényle ou $C_6$-$C_{18}$-aryle ou $R^1$ et $R^2$ sont des chaînons d'un cycle de 4 à 7 chaînons ou d'un système polycyclique,
$R^3$, $R^4$, $R^5$ et $R^6$ représentent hydrogène, $C_1$-$C_{22}$-alkyle, $C_1$-$C_{22}$-alcényle ou $C_6$-$C_{18}$-aryle ou sont des chaînons d'un cycle de 4 à 7 chaînons ou d'un système polycyclique et
$R^7$, $R^8$, $R^9$, $R^{10}$, $R^{11}$ et $R^{12}$ représentent hydrogène, $C_1$-$C_{22}$-alkyle, $C_1$-$C_{22}$-alcényle ou $C_6$-$C_{18}$-aryle ou sont des chaînons d'un cycle de 4 à 7 chaînons ou d'un système polycyclique.

9. Procédé selon l'une quelconque des revendications 1 à 7, dans lequel on utilise, comme anhydride cyclique, au moins un composé choisi dans le groupe constitué par l'anhydride de l'acide maléique, l'anhydride de l'acide phtalique, l'anhydride de l'acide 1,2-cyclohexanedicarboxylique, l'anhydride de l'acide diphénique, l'anhydride de l'acide tétrahydrophtalique, l'anhydride de l'acide méthyltétrahydrophtalique, l'anhydride de l'acide norbornènedioïque et ses produits de chloration, l'anhydride de l'acide succinique, l'anhydride de l'acide glutarique, l'anhydride de l'acide diglycolique, l'anhydride de l'acide 1,8-naphtalique, l'anhydride de l'acide succinique, l'anhydride de l'acide dodécénylsuccinique, l'anhydride de l'acide tétradécénylsuccinique, l'anhydride de l'acide hexadécénylsuccinique, l'anhydride de l'acide octadécénylsuccinique, l'anhydride de l'acide 3-nitrophtalique et 4-nitrophtalique, l'anhydride de l'acide tétrachlorophtalique, l'anhydride de l'acide tétrabromophtalique, l'anhydride de l'acide itaconique, l'anhydride de l'acide diméthylmaléique et l'anhydride de l'acide allylnorbornènedioïque.

10. Procédé selon l'une quelconque des revendications 1 à 9, dans lequel les substances de départ à fonctionnalité H utilisées sont choisies parmi au moins un des groupes constitués par les alcools, les amines, les thiols, les aminoalcools, les thioalcools, les hydroxyesters, les polyétherpolyols, les polyesterpolyols, les polyesterétherpolyols, les polycarbonatepolyols, les polyéthercarbonatepolyols, les polyéthylèneimines, les polyétheramines les polytétrahydrofurannes, les polyétherthiols, les polyacrylatepolyols, l'huile de ricin, le monoglycéride ou le diglycéride de l'acide ricinoléique, les monoglycérides d'acides gras, les monoglycérides, diglycérides et/ou triglycérides chimiquement modifiés d'acides gras et les esters $C_1$-$C_{24}$-alkyliques d'acides gras qui contiennent en moyenne au moins 2 groupes OH par molécule.

**11.** Procédé selon l'une quelconque des revendications 1 à 10, dans lequel les substances de départ à fonctionnalité H utilisées sont choisies parmi au moins un des groupes constitués par l'éthylèneglycol, le propylèneglycol, le 1,3-propanediol, le 1,3-butanediol, le 1,4-butanediol, le 1,5-pentanediol, le 2-méthylpropane-1,3-diol, le néopentylglycol, le 1,6-hexanediol, le 1,8-octanediol, le diéthylèneglycol, le dipropylèneglycol, le glycérol, le triméthylolpropane, les polyétherpolyols difonctionnels et trifonctionnels, le polyétherpolyol étant formé à partir d'une substance de départ à 2 ou à 3 fonctionnalités H et d'oxyde de propylène ou d'une substance de départ à 2 ou à 3 fonctionnalités H, d'oxyde de propylène et d'oxyde d'éthylène et les polyétherpolyols présentant un poids moléculaire $M^n$ dans la plage de 62 à 4500 g/mole et une fonctionnalité de 2 à 3.

**12.** Procédé selon l'une quelconque des revendications 1 à 11, dans lequel le catalyseur de type cyanure métallique double utilisé contient au moins un composé de type cyanure double choisi dans le groupe constitué par l'hexacyanocobaltate (III) de zinc, l'hexacyanoiridate (III) de zinc, l'hexacyanoferrate (III) de zinc et l'hexacyanocobaltate (III) de cobalt (II).

**13.** Procédé selon l'une quelconque des revendications 1 à 12, **caractérisé en ce que** le catalyseur de type cyanure métallique double contient au moins un alcool insaturé en tant que ligand complexe organique.

**14.** Procédé selon l'une quelconque des revendications 1 à 12, dans lequel le catalyseur de type cyanure métallique double utilisé au moins un ligand complexe organique, choisi dans le groupe constitué par les éthers aliphatiques, l'éthanol, l'isopropanol, le n-butanol, l'iso-butanol, le sec-butanol, le tert-butanol, le 2-méthyl-3-butén-2-ol, le 2-méthyl-3-butyn-2-ol, l'éthylèneglycol-mono-tert-butyléther, le diéthylèneglycol-mono-tert-butyléther, le tripropylèneglycol-mono-méthyléther et le 3-méthyl-3-oxétaneméthanol.

**15.** Polyétherestercarbonates pouvant être obtenus par le procédé selon l'une quelconque des revendications 1 à 14.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2287226 A
- WO 2011089120 A
- US 6713599 B1
- EP 0222453 A
- WO 2003029325 A
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A


### In der Beschreibung aufgeführte Nicht-Patentliteratur


- **INOUE et al.** Copolymerization of Carbon Dioxide and Alkylenoxide with Organometallic Compounds. *Die Makromolekulare Chemie,* 1969, vol. 130, 210-220
- **LIU Y. et al.** Synthesis, characterization and hydrolysis of an aliphatic polycarbonat. *POLYMER,* 2006, vol. 47, 8453-8461
- **DONG XU et al.** *Study on synthesis of a novel polyester polyol,* 15. November 2011
- Der DMC-SiO2-Katalysator wurde hergestellt gemäß. *Green Chemistry,* 2012, vol. 14, 1168